# EUROPEAN PATENT SPECIFICATION

(11) **EP 4 257 453 B1**
(45) Date of publication and mention of the grant of the patent: **12.08.2026**
(21) Application number: 20966562.9
(22) Date of filing: 25.12.2020
(51) Int. Cl.: B60W 50/02, G05B 9/03, G06F 11/20

(54) **CONTROL METHOD, MONITORING METHOD, ELECTRONIC CONTROL UNITS, CONTROLLER AND CONTROL SYSTEM**
STEUERUNGSVERFAHREN, ÜBERWACHUNGSVERFAHREN, ELEKTRONISCHE STEUEREINHEITEN, STEUERGERÄT UND STEUERUNGSSYSTEM
PROCÉDÉ DE COMMANDE, PROCÉDÉ DE SURVEILLANCE, UNITÉS DE COMMANDE ÉLECTRONIQUE, DISPOSITIF DE COMMANDE ET SYSTÈME DE COMMANDE

(43) Date of publication of application: 11.10.2023
(73) Proprietor: Yinwang Intelligent Technologies Co., Ltd., Shenzhen, Guangdong 518110 (CN)
(72) Inventor: YANG, Hongbin, Shenzhen, Guangdong 518129 (CN); CHEN, Xuefeng, Shenzhen, Guangdong 518129 (CN); LI, Kun, Shenzhen, Guangdong 518129 (CN)
(74) Representative: Maiwald GmbH
(86) International application number: PCT/CN2020/139368
(87) International publication number: WO 2022/133997

(56) References cited:
- CN-A- 102 582 678
- CN-A- 108 238 034
- CN-A- 109 733 460
- CN-U- 208 399 988
- US-A- 5 271 474
- US-A1- 2006 074 500
- US-A1- 2017 277 153
- US-A1- 2019 243 363
- JI, CHANG: "Preliminary Study on Fault Detection and Diagnosis in Digital Circuits", JINGJING HUABAO - KEHAI STORY EXPO: INNOVATIONS IN SCIENCE EDUCATION, 31 December 2009 (2009-12-31), pages 193, XP009538543, ISSN: 1007-0745

## Description

### TECHNICAL FIELD

This application relates to the vehicle field, and in particular, to a control method, a monitoring method, an electronic control unit, a controller, and a control system.

### BACKGROUND

Safety is one of key issues in future development of vehicles. As technologies become increasingly complex and software and electromechanical integration applications continuously increase, risks from systemic failures and random hardware failures gradually increase.

An electric power steering (Electric Power Steering, EPS) system is an important part of a vehicle, and reliability of the EPS system is particularly important to safety of the vehicle and traffic participants. The ISO 26262 standard for functional safety of vehicles defines an automotive safety integrity level (Automotive Safety Integrity Level, ASIL). According to the ISO 26262 standard, a target of a vehicle is divided into four levels from low to high: ASIL-A, ASIL-B, ASIL-C, and ASIL-D. Based on functional safety requirements of the safety target of the vehicle that are allocated to corresponding components, it can be learned that functional safety requirements related to the EPS need to meet at least the ASIL-D safety level to comply with the functional safety target of the vehicle. However, the conventional EPS system uses a single electronic control unit (Electronic Control Unit, ECU) as a control unit, making it difficult for the vehicle to reach the ASIL-D safety level.

In an existing method for improving a safety level of a vehicle, two mutually redundant ECUs are included in an EPS system and used as control units, where each ECU detects whether any fault occurs in the ECU, and when detecting that a fault occurs in the ECU, notifies the fault to the other ECU.

However, some faults in the ECU cannot be diagnosed by the ECU itself. Therefore, when such a fault occurs in the ECU, the EPS system cannot detect that the ECU is already faulty. Consequently, a vehicle safety accident may be caused.

CN 102 582 678 discloses a control method, wherein the control method is used by a first electronic control unit to monitor a second electronic control unit, and the control method comprises: receiving, by the first electronic control unit, a first input signal and a second input signal, wherein the first input signal and the second input signal comprise sensor-derived data; outputting, by the first electronic control unit, a first output signal based on the first input signal, and providing the first output signal to the second electronic control unit, wherein the first output signal comprises a first control signal to be provided to a first drive unit of a first actuator controlled by the first electronic control unit; receiving, by the first electronic control unit, a second output signal from the second electronic control unit, wherein the second output signal is output by the second electronic control unit based on the second input signal, and wherein the second output signal comprises a second control signal to be provided to a second drive unit of a second actuator controlled by the second electronic control unit; and detecting, by the first electronic control unit, a functional status of the second electronic control unit based on the second input signal and the second output signal.

### SUMMARY

In view of the foregoing disadvantages in the prior art, embodiments of this application provide a control method, a monitoring method, an electronic control unit, a controller, and a control system, as defined by the appended claims, to enlarge fault diagnosis coverage.

According to a first aspect, this application provides a control method as defined by claim 1. The first information and the second information may include, for example, but is not limited to, a control signal to be provided to an actuator such as a motor, or the control signal and a status parameter of a device (for example, a motor) having the first electronic control unit and the second electronic control unit.

In the foregoing solution, the first electronic control unit and the second electronic control unit belong to different computing platforms, and the first electronic control unit detects the functional status of the second electronic control unit by itself, so that the first electronic control unit knows the functional status of the second electronic control unit. Therefore, even if a fault or failure that cannot be diagnosed by the second electronic control unit (for example, a fault or failure caused by a short circuit of a power supply, a communications module, an analog to digital converter (Analog to Digital Converter, ADC), or a crystal oscillator) occurs in the second electronic control unit, the first electronic control unit can detect that the second electronic control unit is faulty, thereby enlarging fault diagnosis coverage.

According to the first aspect, in a first possible implementation of the control method, the first information is provided to the second electronic control unit through a first redundant communication channel. Herein, the information is transmitted by using the redundant communication channel. This can improve reliability of information transmission and interaction on one hand, and is equivalent to adding a communication check on the other hand. Therefore, a communication fault can be distinguished from a function fault of the electronic control unit, and unnecessary turn-off of the actuator caused by misdiagnosing the communication fault as the function fault of the electronic control unit is reduced.

According to the first aspect or the first possible implementation of the first aspect, in a second possible implementation of the control method, the second information is received by the first electronic control unit through a second redundant communication channel. Herein, the information is transmitted by using the redundant communication channel. This can improve reliability of information transmission and interaction on one hand, and is equivalent to adding a communication check on the other hand. Therefore, a communication fault can be distinguished from a function fault of the electronic control unit, and unnecessary turn-off of the actuator caused by misdiagnosing the communication fault as the function fault of the electronic control unit is reduced.

According to any one of the first aspect or the foregoing possible implementations of the first aspect, in a third possible implementation of the control method, the first input signal is received by the first electronic control unit through a third redundant communication channel. Herein, the input signal is transmitted by using the redundant communication channel. When an input signal transmitted by one communication channel in the redundant communication channel is incorrect, the electronic control unit may further continue to use an input signal transmitted by another communication channel in the redundant communication channel. This can improve system redundancy and signal reliability.

According to any one of the first aspect or the foregoing possible implementations of the first aspect, in a fourth possible implementation of the control method, the second input signal is received by the first electronic control unit through a fourth redundant communication channel. Herein, the input signal is transmitted by using the redundant communication channel. When an input signal transmitted by one communication channel in the redundant communication channel is incorrect, the electronic control unit may further continue to use an input signal transmitted by another communication channel in the redundant communication channel. This can improve system redundancy and signal reliability.

According to any one of the first aspect or the foregoing possible implementations of the first aspect, in a fifth possible implementation of the control method, the control method further includes: when detecting that a function of the second electronic control unit is abnormal, the first electronic control unit sends a fault notification to the second electronic control unit, where the fault notification is used to indicate that the second electronic control unit is faulty. Herein, when detecting that the function of the second electronic control unit is abnormal, the first electronic control unit sends the fault notification to the second electronic control unit. Therefore, even if the second electronic control unit cannot detect that the second electronic control unit is faulty, the second electronic control unit can learn in time that a fault has occurred in the second electronic control unit.

According to the fifth possible implementation of the first aspect, in a sixth possible implementation of the control method, the control method further includes: when sending the fault notification, the first electronic control unit outputs a first instruction signal to a drive unit of an actuator controlled by the second electronic control unit, where the first instruction signal instructs the drive unit to perform a first operation on the actuator. Herein, when detecting that the function of the second electronic control unit is abnormal, the first electronic control unit sends the instruction signal to the drive unit of the actuator controlled by the second electronic control unit, so that the drive unit performs a corresponding fault protection operation on the actuator. In this way, the second electronic control unit can be prevented from performing a dangerous operation on a controlled object through the actuator because the second electronic control unit may not diagnose a fault or failure that has occurred in the second electronic control unit.

According to the fifth possible implementation of the first aspect, in a seventh possible implementation of the control method, the control method further includes: if a drive unit of an actuator controlled by the second electronic control unit does not perform a corresponding operation within predetermined duration after the fault notification is sent, the first electronic control unit outputs a second instruction signal to the drive unit, where the second instruction signal instructs the drive unit to perform a second operation on the actuator. Herein, if the drive unit of the actuator controlled by the second electronic control unit does not perform the corresponding operation within the predetermined duration after the first electronic control unit notifies the second electronic control unit that the second electronic control unit is faulty, the first electronic control unit sends the instruction signal to the drive unit, so that the drive unit performs a corresponding fault protection operation on the actuator. In this way, when the second electronic control unit completely fails, the actuator can be prevented from performing a dangerous operation on a controlled object.

According to any one of the first aspect or the foregoing possible implementations of the first aspect, in an eighth possible implementation of the control method, the detecting a functional status of the second electronic control unit includes: the first electronic control unit calculates, based on the second input signal and the second information, a first status parameter of a device having the second electronic control unit; and the first electronic control unit determines the functional status of the second electronic control unit based on the first status parameter and a first parameter threshold. Herein, the first electronic control unit detects the functional status of the second electronic control unit by using the status parameter of the device having the second electronic control unit. Therefore, the first electronic control unit can accurately determine whether the function of the second electronic control unit is faulty or fails.

According to the eighth possible implementation of the first aspect, in a ninth possible implementation of the control method, the calculating a first status parameter of a device having the second electronic control unit includes: the first electronic control unit checks the second input signal and the second information; and when a check result indicates that the second input signal and the second information are valid, the first electronic control unit calculates the first status parameter based on the second input signal and the second information. Herein, the first electronic control unit checks validity of the used input signal and information. Therefore, wrong determining of the functional status of the second electronic control unit due to an invalid input signal and invalid information can be prevented.

According to the eighth possible implementation of the first aspect, in a tenth possible implementation of the control method, the device includes a vehicle; and the calculating a first status parameter of a device having the second electronic control unit includes: the first electronic control unit calculates the first status parameter of the vehicle based on the second input signal and the second information by using one of the following: an electric power steering linearization model, a vehicle stability model, a motor model, the electric power steering linearization model and the vehicle stability model, the electric power steering linearization model and the motor model, the vehicle stability model and the motor model, and the electric power steering linearization model, the vehicle stability model, and the motor model. Herein, the status parameter of the vehicle is calculated by using the electric power steering linearization model, the vehicle stability model, and/or the motor model. Therefore, the status parameter of the vehicle can be accurately calculated.

According to a second aspect, this application provides a monitoring method for a controller, as defined by claim 6.

In the foregoing solution, the first electronic control unit and the second electronic control unit belong to different computing platforms, the first electronic control unit detects the functional status of the second electronic control unit by itself, so that the first electronic control unit knows the functional status of the second electronic control unit, and the second electronic control unit detects the functional status of the first electronic control unit by itself, so that the second electronic control unit knows the functional status of the first electronic control unit. Therefore, even if a fault or failure that cannot be diagnosed by the first electronic control unit (for example, a fault or failure caused by a short circuit of a power supply, a communications module, an analog to digital converter (Analog to Digital Converter, ADC), or a crystal oscillator) occurs in the first electronic control unit, the second electronic control unit can detect that the first electronic control unit is faulty; and similarly, even if a fault or failure that cannot be diagnosed by the second electronic control unit (for example, a fault or failure caused by a short circuit of a power supply, a communications module, an ADC, or a crystal oscillator) occurs in the second electronic control unit, the first electronic control unit can detect that the second electronic control unit is faulty, thereby enlarging fault diagnosis coverage.

According to the second aspect, in a first possible implementation of the monitoring method, the first information is provided to the second electronic control unit through a first redundant communication channel. Herein, the information is transmitted by using the redundant communication channel. This can improve reliability of information transmission and interaction on one hand, and is equivalent to adding a communication check on the other hand. Therefore, a communication fault can be distinguished from a function fault of the controller, and unnecessary turn-off of the actuator caused by misdiagnosing the communication fault as the function fault of the controller is reduced.

According to the second aspect or the first possible implementation of the second aspect, in a second possible implementation of the monitoring method, the first input signal is received by the first electronic control unit and the second electronic control unit through a third redundant communication channel. Herein, the information is transmitted by using the redundant communication channel. This can improve reliability of information transmission and interaction on one hand, and is equivalent to adding a communication check on the other hand. Therefore, a communication fault can be distinguished from a function fault of the controller, and unnecessary turn-off of the actuator caused by misdiagnosing the communication fault as the function fault of the controller is reduced.

According to any one of the second aspect or the foregoing possible implementations of the second aspect, in a third possible implementation of the monitoring method, the first input signal is received by the first electronic control unit and the second electronic control unit through a third redundant communication channel. Herein, the input signal is transmitted by using the redundant communication channel. When an input signal transmitted by one communication channel in the redundant communication channel is incorrect, the electronic control unit may further continue to use an input signal transmitted by another communication channel in the redundant communication channel. This can improve system redundancy and signal reliability.

According to any one of the second aspect or the foregoing possible implementations of the second aspect, in a fourth possible implementation of the monitoring method, the second input signal is received by the first electronic control unit and the second electronic control unit through a fourth redundant communication channel. Herein, the input signal is transmitted by using the redundant communication channel. When an input signal transmitted by one communication channel in the redundant communication channel is incorrect, the electronic control unit may further continue to use an input signal transmitted by another communication channel in the redundant communication channel. This can improve system redundancy and signal reliability.

According to any one of the second aspect or the foregoing possible implementations of the second aspect, in a fifth possible implementation of the monitoring method, the monitoring method further includes: when detecting that a function of the first electronic control unit is abnormal, the second electronic control unit sends a first fault notification to the first electronic control unit, where the first fault notification is used to indicate that the first electronic control unit is faulty. Herein, when detecting that the function of the first electronic control unit is abnormal, the second electronic control unit sends the fault notification to the first electronic control unit. Therefore, even if the first electronic control unit cannot detect that the first electronic control unit is faulty, the first electronic control unit can learn in time that a fault has occurred in the first electronic control unit.

According to any one of the second aspect or the foregoing possible implementations of the second aspect, in a sixth possible implementation of the monitoring method, the monitoring method further includes: when detecting that a function of the second electronic control unit is abnormal, the first electronic control unit sends a second fault notification to the second electronic control unit, where the second fault notification is used to indicate that the second electronic control unit is faulty. Herein, when detecting that the function of the second electronic control unit is abnormal, the first electronic control unit sends the fault notification to the second electronic control unit. Therefore, even if the second electronic control unit cannot detect that the second electronic control unit is faulty, the second electronic control unit can learn in time that a fault has occurred in the second electronic control unit.

According to the fifth possible implementation of the second aspect, in a seventh possible implementation of the monitoring method, the monitoring method further includes: when sending the first fault notification, the second electronic control unit outputs a first instruction signal to a first drive unit of a first actuator controlled by the first electronic control unit, where the first instruction signal instructs the first drive unit to perform a first operation on the first actuator. Herein, when detecting that the function of the first electronic control unit is abnormal, the second electronic control unit sends the instruction signal to the first drive unit of the first actuator controlled by the first electronic control unit, so that the first drive unit performs a corresponding fault protection operation on the first actuator. In this way, the first electronic control unit can be prevented from performing a dangerous operation, through the first actuator, on an object controlled by the controller because the first electronic control unit may not diagnose a fault or failure that has occurred in the first electronic control unit.

According to the sixth possible implementation of the second aspect, in an eighth possible implementation of the monitoring method, the monitoring method further includes: when sending the second fault notification, the first electronic control unit outputs a second instruction signal to a second drive unit of a second actuator controlled by the second electronic control unit, where the second instruction signal instructs the second drive unit to perform a second operation on the second actuator. Herein, when detecting that the function of the second electronic control unit is abnormal, the first electronic control unit sends the instruction signal to the second drive unit of the second actuator controlled by the second electronic control unit, so that the second drive unit performs a corresponding fault protection operation on the second actuator. In this way, the second electronic control unit can be prevented from performing a dangerous operation, through the second actuator, on an object controlled by the controller because the second electronic control unit may not diagnose a fault or failure that has occurred in the second electronic control unit.

According to the fifth possible implementation of the second aspect, in a ninth possible implementation of the monitoring method, the monitoring method further includes: if a first drive unit of a first actuator controlled by the first electronic control unit does not perform a corresponding operation within first predetermined duration after the first fault notification is sent, the second electronic control unit outputs a third instruction signal to the first drive unit, where the third instruction signal instructs the first drive unit to perform a third operation on the first actuator. Herein, if the first drive unit of the first actuator controlled by the first electronic control unit does not perform the corresponding operation within the predetermined duration after the second electronic control unit notifies the first electronic control unit that the first electronic control unit is faulty, the second electronic control unit sends the instruction signal to the first drive unit, so that the first drive unit performs a corresponding fault protection operation on the first actuator. In this way, when the first electronic control unit completely fails, the first actuator can be prevented from performing a dangerous operation on an object controlled by the controller.

According to the sixth possible implementation of the second aspect, in a tenth possible implementation of the monitoring method, the monitoring method further includes: if a second drive unit of a second actuator controlled by the second electronic control unit does not perform a corresponding operation within second predetermined duration after the second fault notification is sent, the first electronic control unit outputs a fourth instruction signal to the second drive unit, where the fourth instruction signal instructs the second drive unit to perform a fourth operation on the second actuator. Herein, if the second drive unit of the second actuator controlled by the second electronic control unit does not perform the corresponding operation within the predetermined duration after the first electronic control unit notifies the second electronic control unit that the second electronic control unit is faulty, the first electronic control unit sends the instruction signal to the second drive unit, so that the second drive unit performs a corresponding fault protection operation on the second actuator. In this way, when the second electronic control unit completely fails, the second actuator can be prevented from performing a dangerous operation on an object controlled by the controller.

According to any one of the second aspect or the foregoing possible implementations of the second aspect, in an eleventh possible implementation of the monitoring method, the detecting a functional status of the second electronic control unit includes: the first electronic control unit calculates, based on the second input signal and the second information, a first status parameter of a device having the controller; and the first electronic control unit determines the functional status of the second electronic control unit based on the first status parameter and a first parameter threshold. Herein, the first electronic control unit detects the functional status of the second electronic control unit by using the status parameter of the device including the controller. Therefore, the first electronic control unit can accurately determine whether the function of the second electronic control unit is faulty or fails.

According to the eleventh possible implementation of the second aspect, in a twelfth possible implementation of the monitoring method, the calculating a first status parameter of a device having the controller includes: the first electronic control unit checks the second input signal and the second information; and when a check result indicates that the second input signal and the second information are valid, the first electronic control unit calculates the first status parameter based on the second input signal and the second information. Herein, the first electronic control unit checks validity of the used second input signal and second information. Therefore, wrong determining of the functional status of the second electronic control unit due to an invalid input signal and invalid information can be prevented.

According to any one of the second aspect or the foregoing possible implementations of the second aspect, in a thirteenth possible implementation of the monitoring method, the detecting a functional status of the first electronic control unit includes: the second electronic control unit calculates, based on the first input signal and the first information, a second status parameter of the device having the controller; and the second electronic control unit determines the functional status of the first electronic control unit based on the second status parameter and a second parameter threshold. Herein, the second electronic control unit detects the functional status of the first electronic control unit by using the status parameter of the device including the controller. Therefore, the second electronic control unit can accurately determine whether the function of the first electronic control unit is faulty or fails.

According to the thirteenth possible implementation of the second aspect, in a fourteenth possible implementation of the monitoring method, the calculating a second status parameter of the device having the controller includes: the second electronic control unit checks the first input signal and the first information; and when a check result indicates that the first input signal and the first information are valid, the second electronic control unit calculates the second status parameter based on the first input signal and the first information. Herein, the second electronic control unit checks validity of the used first input signal and first information. Therefore, wrong determining of the functional status of the first electronic control unit due to an invalid input signal and invalid information can be prevented.

According to the eleventh possible implementation of the second aspect, in a fifteenth possible implementation of the monitoring method, the device includes a vehicle; and the calculating a first status parameter of a device having the controller includes: the first electronic control unit calculates the first status parameter of the vehicle based on the second input signal and the second information by using one of the following: an electric power steering linearization model, a vehicle stability model, a motor model, the electric power steering linearization model and the vehicle stability model, the electric power steering linearization model and the motor model, the vehicle stability model and the motor model, and the electric power steering linearization model, the vehicle stability model, and the motor model. Herein, the status parameter of the vehicle is calculated by using the electric power steering linearization model, the vehicle stability model, and/or the motor model. Therefore, the status parameter of the vehicle can be accurately calculated.

According to the thirteenth possible implementation of the second aspect, in a sixteenth possible implementation of the monitoring method, the device includes a vehicle; and the calculating a second status parameter of the device having the controller includes: the second electronic control unit calculates the second status parameter of the vehicle based on the first input signal and the first information by using one of the following: an electric power steering linearization model, a vehicle stability model, a motor model, the electric power steering linearization model and the vehicle stability model, the electric power steering linearization model and the motor model, the vehicle stability model and the motor model, and the electric power steering linearization model, the vehicle stability model, and the motor model. Herein, the status parameter of the vehicle is calculated by using the electric power steering linearization model, the vehicle stability model, and/or the motor model. Therefore, the status parameter of the vehicle can be accurately calculated.

According to a third aspect, this application provides an electronic control unit. The electronic control unit includes a microcomputer, an input circuit, and an output circuit. The input circuit is configured to preprocess an input signal, and provide the processed input signal to the microcomputer. The output circuit is configured to convert a processing result sent by the microcomputer into a control signal for outputting. The microcomputer includes: an input/output interface, connected to a bus, the input circuit, and the output circuit; a processor, connected to the bus; and a memory, connected to the bus. The memory stores a computer program. When the computer program is executed by the processor, the processor is enabled to perform the control method according to any one of the first aspect or the possible implementations of the first aspect.

For technical effects of the third aspect, refer to technical effects of the first aspect and the possible implementations of the first aspect. Details are not described herein again.

According to a fourth aspect, this application provides a controller. The controller includes a first electronic control unit and a second electronic control unit. The first electronic control unit and the second electronic control unit respectively perform the operations performed by the first electronic control unit and the operations performed by the second electronic control unit in the monitoring method according to any one of the second aspect or the possible implementations of the second aspect.

For technical effects of the fourth aspect, refer to technical effects of the second aspect and the possible implementations of the second aspect. Details are not described herein again.

According to a fifth aspect, this application provides a control system. The control system includes the controller according to the fourth aspect, a first input end, a second input end, the first drive unit, and the second drive unit. The first input end is configured to receive the first input signal, and send the received first input signal to the first electronic control unit and the second electronic control unit in the controller separately. The second input end is configured to receive the second input signal, and send the received second input signal to the second electronic control unit and the first electronic control unit in the controller separately. The first drive unit is connected to the first electronic control unit and the second electronic control unit. The second drive unit is connected to the first electronic control unit and the second electronic control unit.

According to a sixth aspect, this application provides a vehicle. The vehicle includes the control system according to the fifth aspect.

According to a seventh aspect, this application provides a computer-readable storage medium. The computer-readable storage medium stores a computer program. When the computer program is executed by an electronic control unit, the electronic control unit is enabled to perform the control method according to any one of the first aspect or the possible implementations of the first aspect.

According to an eighth aspect, this application provides a computer program. When the computer program is executed by an electronic control unit, the electronic control unit is enabled to perform the control method according to any one of the first aspect or the possible implementations of the first aspect.

### BRIEF DESCRIPTION OF DRAWINGS

The following further describes features of this application and a relationship between the features with reference to the accompanying drawings. All accompanying drawings are examples, and some features are not shown to actual scale. In addition, some accompanying drawings may omit common features that are not mandatory for this application in the field of this application, or additionally show features that are not mandatory for this application. A combination of the features shown in the accompanying drawings is not intended to limit this application. The specific accompanying drawings are described as follows:
FIG. 1 is a schematic diagram of an EPS system according to the prior art 1;
FIG. 2 is a schematic diagram of an EPS system according to the prior art 2;
FIG. 3 is a schematic diagram of an application scenario according to an embodiment of this application;
FIG. 4A is a flowchart of a control method according to an embodiment of this application;
FIG. 4B is a flowchart of a monitoring method for a controller according to an embodiment of this application;
FIG. 5A is a schematic diagram of a controller according to an embodiment of this application;
FIG. 5B is a schematic diagram of an electronic control unit according to an embodiment of this application;
FIG. 6 is a schematic diagram of an architecture of an EPS system according to a specific implementation example of this application;
FIG. 7 is a detailed schematic diagram of an EPS system according to a specific implementation example of this application;
FIG. 8 is a schematic diagram of a second application program unit according to a specific implementation example of this application; and
FIG. 9 is a schematic diagram of failure mode effect and diagnostic analysis of solutions arranged based on different safety mechanisms according to an embodiment of this application.

### DESCRIPTION OF EMBODIMENTS

In the specification and claims, terms such as "first", "second", and "third", or "module A", "module B", and "module C" are merely used to distinguish between similar objects, and do not represent a specific order of the objects. It may be understood that specific orders or sequences may be interchanged if permitted, so that embodiments of this application described herein can be implemented in an order other than the order illustrated or described herein.

Reference numerals that indicate steps such as S110 and S120 in the following descriptions do not necessarily indicate that the steps are definitely performed based on the order. If permitted, the steps may be interchanged in their sequence or may be performed simultaneously.

The term "include" used in the specification and claims should not be construed as being limited to content listed thereafter, and does not preclude other elements or steps. Therefore, the term should be construed as specifying presence of the mentioned feature, entirety, step, or component, but does not preclude presence or addition of one or more other features, entireties, steps, or components and groups thereof. Therefore, the expression "a device including an apparatus A and an apparatus B" should not be limited to a device including only the components A and B. In addition, the term "a plurality of" used in the specification and claims indicates two or more than two.

Reference in this specification to "some embodiments" or "an embodiment" means that a particular feature, structure, or characteristic described in connection with the embodiment is included in at least one embodiment of this application. Therefore, the term "in some embodiments" or "in an embodiment" that appears in each part of this specification does not necessarily refer to a same embodiment, but may refer to a same embodiment. In addition, in one or more embodiments, particular features, structures, or characteristics can be combined in any appropriate manner, as would be apparent to a person of ordinary skill in the art from this disclosure.

For better understanding the technical solutions of this application, the following first briefly describes a status of the prior art.

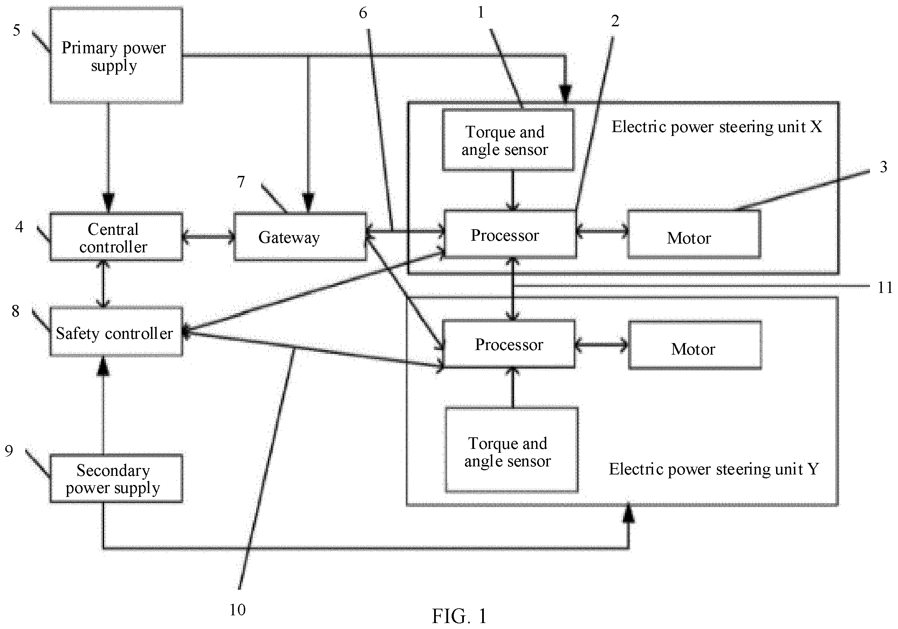

FIG. 1 is a schematic diagram of an EPS system according to the prior art 1. As shown in FIG. 1, the EPS system includes two electric power steering units: an electric power steering unit X and an electric power steering unit Y. Each of the electric power steering units X and Y has a torque and angle sensor 1 to independently transmit a signal to processor 2 of the electric power steering unit, and the processor 2 performs a control operation on a motor 3 of the electric power steering unit. The two processors 2 communicate with each other by using a redundant signal line 11. In addition, the EPS system in FIG. 1 uses a redundancy design with a central controller 4 powered by a primary power supply 5 and a safety controller 8 powered by a slave power supply, which is equivalent to redundancy of a vehicle bus. The central controller 4 communicates with the two processors 2 through a gateway 7 by using a bus 6. When the central controller 4 fails, the safety controller 8 communicates with the two processors 2.

However, through in-depth research, the inventors of this application find that the prior art 1 has the following disadvantages. In the prior art 1 shown in FIG. 1, although redundancy of two systems (that is, the electric power steering unit X and the electric power steering unit Y) is implemented, each system does not monitor an input of the peer system. Therefore, if a fault occurs in one of the two systems but is not detected by the system itself, the peer system or the other system is also unable to detect the fault and unable to know that the system is faulty. In the prior art 1 shown in FIG. 1, although redundancy of two processors (that is, the two processors 2) is implemented, when any one of the processor 2, the sensor 1, and the motor 3 of the electric power steering unit X or the electric power steering unit Y fails and an actuator works abnormally, the normal electric power steering unit cannot turn off the motor 3 in the faulty electric power steering unit. In the prior art 1 shown in FIG. 1, no redundancy design is used for sensor signals of the two systems (that is, the electric power steering unit X and the electric power steering unit Y). Therefore, when the sensor 1 is abnormal and the system cannot diagnose the fault, a residual fault may be caused.

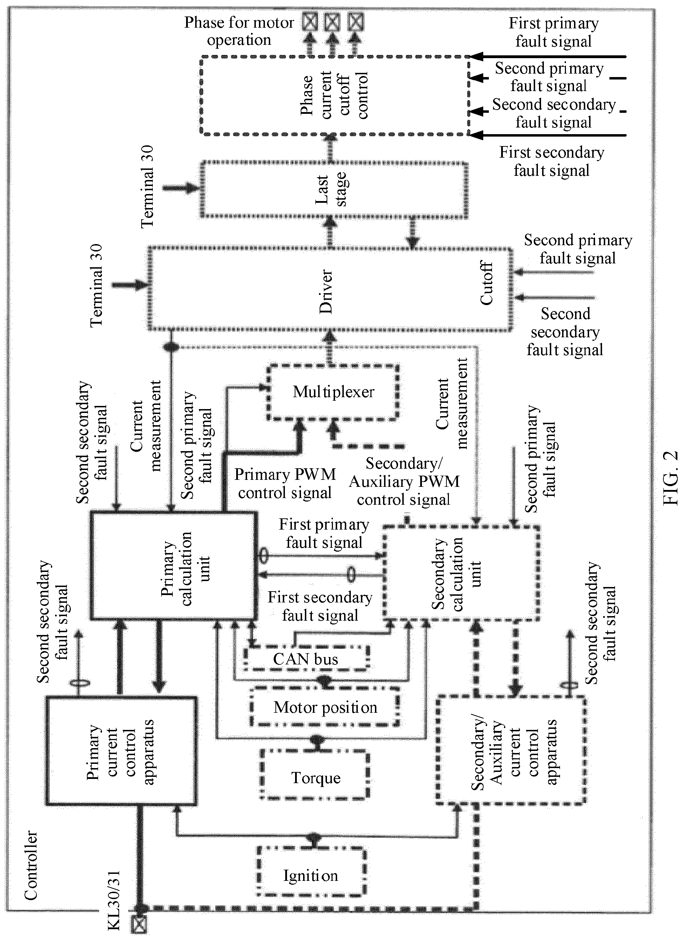

FIG. 2 is a schematic diagram of an EPS system according to the prior art 2. As shown in FIG. 2, in the prior art 2, partial redundancy of calculation units is implemented, and a primary auxiliary calculation unit and a secondary/auxiliary calculation unit control starting/stopping of a motor relay. When detecting that the peer calculation unit is faulty, the primary auxiliary calculation unit and the secondary/auxiliary calculation unit turn off a motor relay controlled by the peer calculation module. Interaction between two systems (that is, a system in which the primary calculation unit is located and a system in which the secondary calculation unit is located) is implemented merely by transferring a fault signal. Each of the two calculation units calculates a common-source signal input based on a computing platform of the calculation unit, but there is no redundant input signal. In addition, the two computing platforms perform computation simultaneously, and there are two control signals at the same time. A multiplexer determines which control signal is finally output.

However, through in-depth research, the inventors of this application find that the prior art 2 has the following disadvantages. In the prior art 2 shown in FIG. 2, each system only diagnoses whether communication of the peer system is normal, and does not diagnose a status of the peer system. In other words, a dual-system check mode shown in FIG. 2 stays at checking fault signals output by the two systems, and does not perform a function check at a peer system input end or a system level. Once a fault that cannot be diagnosed by a system occurs in the system, the fault becomes a residual fault.

The following describes the embodiments of this application in detail with reference to the accompanying drawings.

For purposes of accurately describing the technical content in this application and accurately understanding the technical content in this application, the following explanations, descriptions, or definitions are provided for terms used in this specification before specific implementations are described.

Autonomous driving (Autonomous Driving): It indicates that a vehicle can automatically implement driving tasks such as route planning, behavior decision-making, and motion planning (speed and track planning).

Level of driving automation: The U.S.-based Society of Automotive Engineers (Society of Automotive Engineers, SAE) defines five levels of driving automation: L1 driver assistance (Level 1 Driver Assistance), L2 partial automation (Level 2 Partial Automation), L3 conditional automation (Level 3 Conditional Automation), L4 high automation (Level 4 High Automation), and L5 full automation (Level 5 Full Automation).

ECU (Electronic Control Unit): The ECU is usually applied to a vehicle, and is also referred to as a "vehicle computer". The ECU generally uses various sensors and buses to collect and exchange data to determine a vehicle status and a driver's intention, and performs an operation on the vehicle by using an actuator, to control a driving status of the vehicle and implement various functions of the vehicle.

Field-oriented control (Field-Oriented Control, FOC). FOC is one of best methods for high-efficiency control of a brushless direct current motor (Brushless Direct Current Motor, BLDC) and a permanent magnet synchronous motor (Permanent Magnet Synchronous Motor, PMSM). FOC is intended to control a magnetic field size and direction accurately, so that a motor has a stable motion torque, low noise, and high efficiency, and achieves a high speed dynamic response.

Park transformation: It is also referred to as a Park transformation. It is a coordinate transformation most frequently used for analyzing running of a synchronous motor. It transforms a static αβ coordinate system into a rotating dq coordinate system.

Clark transformation: It is a coordinate transformation method controlled by FOC. It transforms an abc coordinate system into an αβ coordinate system.

Failure mode effect and diagnostic analysis (Failure Mode Effect and Diagnostic Analysis, FMEDA): It is a basis of quantitative analysis of a product design. It can be used to analyze an entire system or a module or unit of a system.

Safety mechanism (Safety Mechanism, SM): It refers to a function and is implemented by electronic and electrical components or other technical means to detect a fault or a control failure, so that a product can enter or maintain a safe state to avoid an unreasonable risk.

Diagnosis coverage rate: It indicates a percentage of a failure rate of a component that can be diagnosed by the safety mechanism. Typical values are 60%, 90%, and 99%. A coverage rate of the safety mechanism can be further analyzed and optimized based on an actual application scenario of the product.

Residual fault: It is a residual part of a fault that is diagnosed in a hardware unit, that is, a part that is not covered by diagnosis (diagnosis coverage > 0%). The residual fault immediately leads to violation of a safety target.

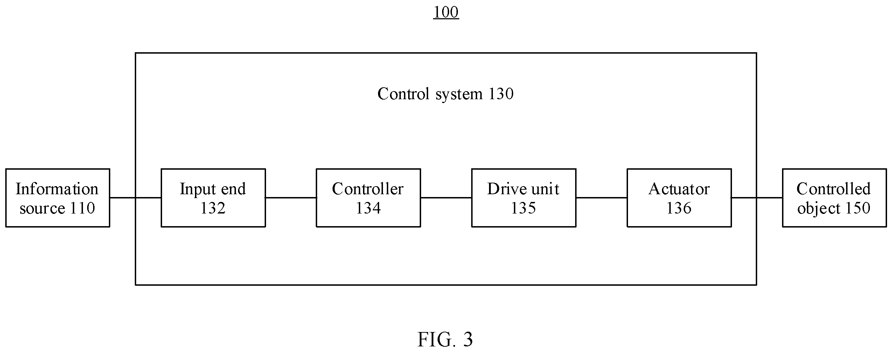

FIG. 3 is a schematic diagram of an application scenario according to an embodiment of this application. The application scenario shown in FIG. 3 is a device 100. The device may include, for example, but is not limited to, a vehicle or a machine.

As shown in FIG. 3, the device 100 includes an information source 110, a control system 130, and a controlled object 150. The control system 130 is connected to the information source 110 and the controlled object 150.

The information source 110 may be various apparatuses for generating and/or collecting information. For example, when the device 100 is a vehicle, the information source 110 may include, for example, but is not limited to, a steering wheel torque and angle sensor of the vehicle, a motor position sensor, a vehicle speed sensor, and/or a controller area network (Controller Area Network, CAN) bus configured to provide a vehicle signal input for the vehicle.

The control system 130 is configured to generate a control signal based on information from the information source 110 to control the controlled object 150. For example, when the device 100 is a vehicle, the control system 130 may be, for example, but is not limited to, an electric power steering (Electric Power Steering, EPS) system, an engine controller system, a motor controller system, or a braking controller system.

The control system 130 may include an input end 132, a controller 134, a drive unit 135, and an actuator 136. The input end 132 is configured to receive information from the information source 110 and send the information to the controller 134. The controller 134 is configured to generate a control signal based on information received from the input end 132, and output the generated control signal to the drive unit 135. The drive unit 135 is configured to control an operation of the actuator 136 based on the control signal from the controller 134, so that the controlled object 150 performs a predetermined operation. For example, when the device 100 is a vehicle, and the control system 130 is an EPS system, an engine controller system, a motor controller system, or a braking controller system, the actuator 136 may be, for example, a motor.

The controlled object 150 is an object controlled by the controller 134 of the control system 130. For example, when the device 100 is a vehicle, the controlled object 150 may be, for example, but is not limited to, a steering wheel of the vehicle, an engine that uses fuel to power the vehicle, a motor that uses electric energy to power the vehicle, or a brake.

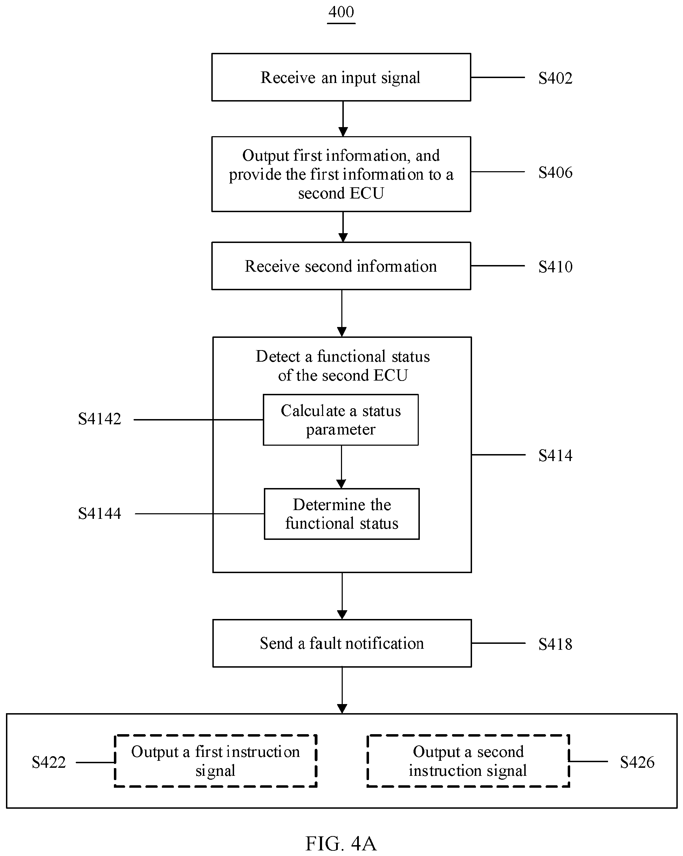

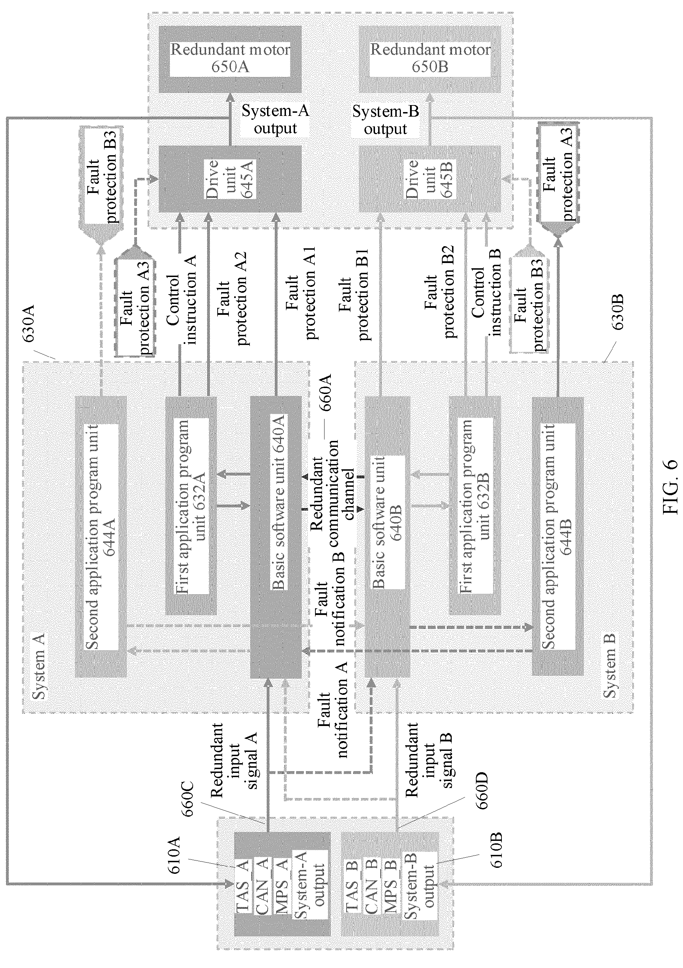

FIG. 4A is a flowchart of a control method according to an embodiment of this application. The control method 400 shown in FIG. 4A is used by a first ECU to monitor a second ECU. The first ECU and the second ECU may be, for example, but are not limited to, an ECU 630A and an ECU 630B respectively in an EPS system 600 shown in FIG. 6, or the first ECU and the second ECU may be, for example, but are not limited to, an ECU 630B and an ECU 630A respectively. As shown in FIG. 4A, the control method 400 may include steps S402 to S414.

In step S402, the first ECU receives a first input signal and a second input signal.

The first input signal and the second input signal may be provided, for example, by the input end 132 shown in FIG. 3. The input end 132 may be a single input end. In this case, the first input signal and the second input signal may be received by the single input end, for example, from the information source 110, and then provided to the first ECU and the second ECU. Alternatively, the input end 132 may include a first input and a second input. In this case, the first input signal may be received by the first input end, for example, from the information source 110, and then provided to the first ECU and the second ECU, and the second input signal may be received by the second input end, for example, from the information source 110, and then provided to the first ECU and the second ECU. In addition, depending on different control systems in which the first ECU and the second ECU are located, the first input signal and the second input signal may include different information. For example, when the first ECU and the second ECU are located in a controller in an EPS system of a vehicle, the first input signal and the second input signal may include, but are not limited to, data from a steering wheel torque and angle sensor, a motor position sensor, a vehicle speed sensor, and/or a CAN bus.

In step S406, the first ECU outputs first information based on the first input signal, and provides the first information to the second ECU.

In step S410, the first ECU receives second information from the second ECU, where the second information is output by the second ECU based on the second input signal.

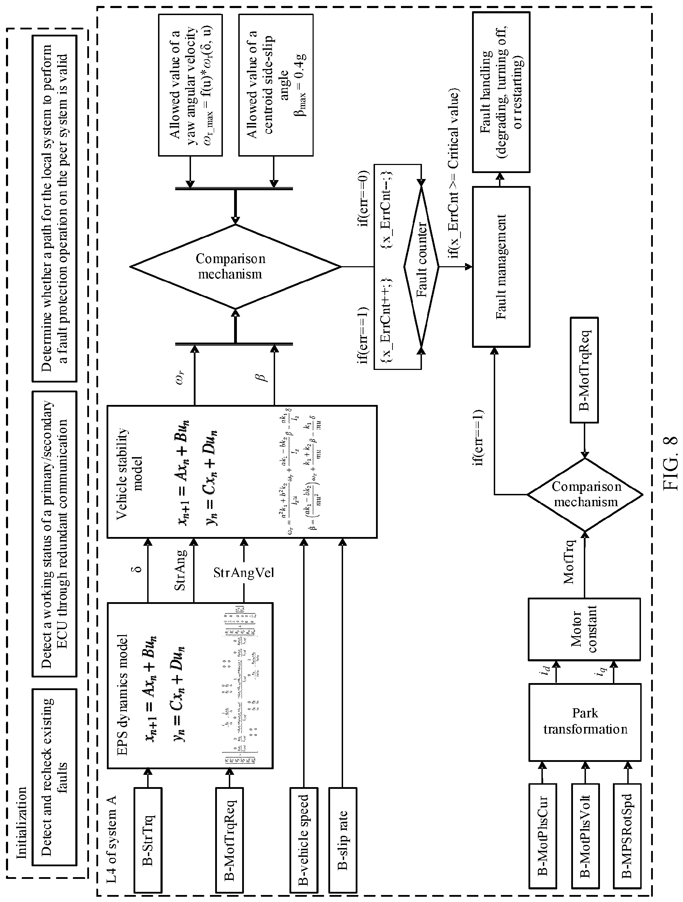

The first information may include, for example, but is not limited to, a first control signal to be provided to a first drive unit of a first actuator controlled by the first ECU, or the first control signal and a status parameter of a device (for example, a vehicle) having the first ECU. The second information may include, for example, but is not limited to, a second control signal to be provided to a second drive unit of a second actuator controlled by the second ECU, or the second control signal and a status parameter of a device (for example, a vehicle) having the second ECU. The status parameter may include, for example, B-MotPhsCur (phase current), B-MotPhsVolt (phase voltage), and B-MPSRotSpd (motor rotation speed) shown in FIG. 8. The first actuator and the second actuator may be a same actuator, or may be different actuators.

In step S414, the first ECU detects a functional status of the second ECU based on the second input signal and the second information.

The functional status may indicate, for example, whether a function of the second ECU is normal, or whether a fault occurs.

In the foregoing solution, the first ECU and the second ECU belong to different computing platforms, and the first ECU detects the functional status of the second ECU by itself, so that the first ECU knows the functional status of the second ECU. Therefore, even if a fault or failure that cannot be diagnosed by the second ECU (for example, a fault or failure caused by a short circuit of a power supply, a communications module, an analog to digital converter (Analog to Digital Converter, ADC), or a crystal oscillator) occurs in the second ECU, the first ECU can detect that the second ECU is faulty, thereby enlarging fault diagnosis coverage.

In addition, in some embodiments, the first information is provided to the second ECU through a first redundant communication channel. The first redundant communication channel may be, for example, but is not limited to, a redundant communication channel 660A shown in FIG. 6. Herein, the information is transmitted by using the redundant communication channel. This can improve reliability of information transmission and interaction on one hand, and is equivalent to adding a communication check on the other hand. Therefore, a communication fault can be distinguished from a function fault of the ECU, and unnecessary turn-off of the actuator caused by misdiagnosing the communication fault as the function fault of the ECU is reduced.

In addition, in some embodiments, the second information is received by the first ECU through a second redundant communication channel. The second redundant communication channel may be, for example, but is not limited to, a redundant communication channel 660A shown in FIG. 6. Herein, the information is transmitted by using the redundant communication channel. This can improve reliability of information transmission and interaction on one hand, and is equivalent to adding a communication check on the other hand. Therefore, a communication fault can be distinguished from a function fault of the ECU, and unnecessary turn-off of the actuator caused by misdiagnosing the communication fault as the function fault of the ECU is reduced.

In addition, in some embodiments, the first input signal is received by the first ECU through a third redundant communication channel. The third redundant communication channel may be, for example, but is not limited to, a redundant communication channel 660C shown in FIG. 6. Herein, the input signal is transmitted by using the redundant communication channel. When an input signal transmitted by one communication channel in the redundant communication channel is incorrect, the ECU may further continue to use an input signal transmitted by another communication channel in the redundant communication channel. This can improve system redundancy and signal reliability.

In addition, in some embodiments, the second input signal is received by the first ECU through a fourth redundant communication channel. The fourth redundant communication channel may be, for example, but is not limited to, a redundant communication channel 660D shown in FIG. 6. Herein, the input signal is transmitted by using the redundant communication channel. When an input signal transmitted by one communication channel in the redundant communication channel is incorrect, the electronic control unit may further continue to use an input signal transmitted by another communication channel in the redundant communication channel. This can improve system redundancy and signal reliability.

In addition, in some embodiments, the control method 400 may further include step S418. In step S418, when detecting that the function of the second ECU is abnormal, the first ECU sends a fault notification to the second ECU, where the fault notification is used to indicate that the second ECU is faulty. Herein, when detecting that the function of the second ECU is abnormal, the first ECU sends the fault notification to the second ECU. Therefore, even if the second ECU cannot detect that the second ECU is faulty, the second ECU can learn in time that a fault has occurred in the second ECU.

In addition, in some embodiments, the control method 400 may further include step S422 or step S426.

In step S422, when sending the fault notification, the first ECU outputs a first instruction signal to the drive unit of the actuator controlled by the second ECU, where the first instruction signal instructs the drive unit to perform a first operation on the actuator. The first operation may be, for example, a fault protection operation mentioned in this specification. The first operation may include, for example, turning off the actuator, degrading the actuator, or restarting the actuator. Herein, when detecting that the function of the second ECU is abnormal, the first ECU sends the instruction signal to the drive unit of the actuator controlled by the second ECU, so that the drive unit performs a corresponding fault protection operation on the actuator. In this way, the second ECU can be prevented from performing a dangerous operation on a controlled object through the actuator because the second ECU may not diagnose a fault or failure that has occurred in the second ECU.

In step S426, if the drive unit of the actuator controlled by the second ECU does not perform a corresponding operation within predetermined duration after the fault notification is sent, the first ECU outputs a second instruction signal to the drive unit, where the second instruction signal instructs the drive unit to perform a second operation on the actuator. The second operation may be, for example, a fault protection operation mentioned in this specification. The second operation may include, for example, turning off the actuator, degrading the actuator, or restarting the actuator. Herein, if the drive unit of the actuator controlled by the second ECU does not perform the corresponding operation within the predetermined duration after the first ECU notifies the second ECU that the second ECU is faulty, the first ECU sends the instruction signal to the drive unit, so that the drive unit performs a corresponding fault protection operation on the actuator. In this way, when the second ECU completely fails, the actuator can be prevented from performing a dangerous operation on a controlled object.

In addition, in some embodiments, step S414 may include step S4142 and step S4144. In step S4142, the first ECU calculates, based on the second input signal and the second information, a first status parameter of the device having the second ECU. In step S4144, the first ECU determines the functional status of the second ECU based on the first status parameter and a first parameter threshold. For example, without limitation, when the device having the second ECU is a vehicle and the second ECU is located in a controller in an EPS system, the first status parameter may include, for example, but is not limited to, a yaw angular velocity and a centroid side-slip angle of the vehicle, and the first parameter threshold may include, for example, but is not limited to, a maximum allowed yaw angular velocity and a maximum allowed centroid side-slip angle of the vehicle at a current vehicle speed and a front wheel angle. Herein, the first ECU detects the functional status of the second ECU by using the status parameter of the device having the second ECU. Therefore, the first ECU can accurately determine whether the function of the second ECU is faulty or fails.

In addition, in some embodiments, step S4142 may include: the first ECU checks the second input signal and the second information; and when a check result indicates that the second input signal and the second information are valid, the first ECU calculates the first status parameter based on the second input signal and the second information. Herein, the first ECU checks validity of the used input signal and information. Therefore, wrong determining of the functional status of the second ECU due to an invalid input signal and invalid information can be prevented.

In addition, in some embodiments, the device includes a vehicle, and step S4142 may include: the first ECU calculates the first status parameter of the vehicle based on the second input signal and the second information by using one of the following: an electric power steering linearization model, a vehicle stability model, a motor model, the electric power steering linearization model and the vehicle stability model, the electric power steering linearization model and the motor model, the vehicle stability model and the motor model, and the electric power steering linearization model, the vehicle stability model, and the motor model. Herein, the status parameter of the vehicle is calculated by using the electric power steering linearization model, the vehicle stability model, and/or the motor model. Therefore, the status parameter of the vehicle can be accurately calculated.

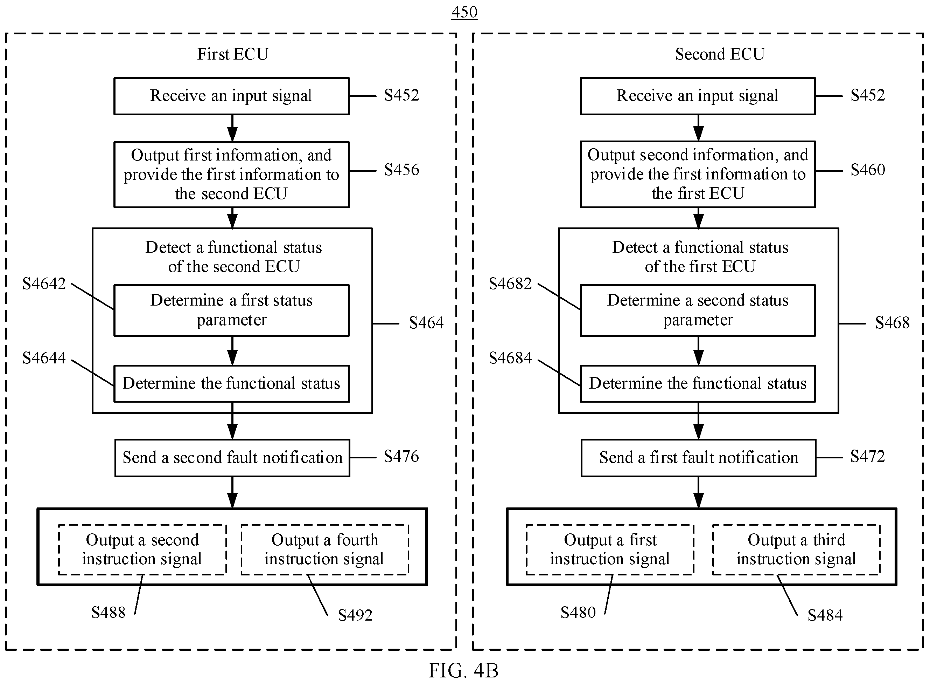

FIG. 4B is a flowchart of a monitoring method for a controller according to an embodiment of this application. The monitoring method 450 shown in FIG. 4B is used for a controller A including a first ECU and a second ECU. The controller A may be, for example, but is not limited to, a controller formed by an ECU 630A and an ECU 630B in an EPS system 600 shown in FIG. 6. As shown in FIG. 4B, the monitoring method 450 may include steps S452 to S468.

In step S452, the first ECU and the second ECU of the controller A receive a first input signal and a second input signal.

The first input signal and the second input signal may be provided, for example, by the input end 132 shown in FIG. 3. The input end 132 may be a single input end. In this case, the first input signal and the second input signal may be received by the single input end, for example, from the information source 110, and then provided to the first ECU and the second ECU of the controller A. Alternatively, the input end 132 may include a first input and a second input. In this case, the first input signal may be received by the first input end, for example, from the information source 110, and then provided to the first ECU and the second ECU of the controller A, and the second input signal may be received by the second input end, for example, from the information source 110, and then provided to the first ECU and the second ECU of the controller A. In addition, depending on different control systems in which the controller A is located, the first input signal and the second input signal may include different information. For example, when the controller A is a controller in an EPS system of a vehicle, the first input signal and the second input signal may include, but are not limited to, data from a steering wheel torque and angle sensor, a motor position sensor, a vehicle speed sensor, and/or a CAN bus.

In step S456, the first ECU of the controller A outputs first information based on the first input signal, and provides the first information to the second ECU of the controller A.

In step S460, the second ECU of the controller A outputs second information based on the second input signal, and provides the second information to the first ECU of the controller A.

The first information may include, for example, but is not limited to, a first control signal to be provided to a first drive unit of a first actuator controlled by the first ECU of the controller A, or the first control signal and a status parameter of a device (for example, a vehicle) having the controller A. The second information may include, for example, but is not limited to, a second control signal to be provided to a second drive unit of a second actuator controlled by the second ECU of the controller A, or the second control signal and a status parameter of a device (for example, a vehicle) having the controller A. The status parameter may include, for example, B-MotPhsCur (phase current), B-MotPhsVolt (phase voltage), and B-MPSRotSpd (motor rotation speed) shown in FIG. 8. The first actuator and the second actuator may be a same actuator, or may be different actuators.

In step S464, the first ECU of the controller A detects a functional status of the second ECU of the controller A based on the second input signal and the second information from the second ECU of the controller A.

In step S468, the second ECU of the controller A detects a functional status of the first ECU of the controller A based on the first input signal and the first information from the first ECU of the controller A.

The functional status may indicate, for example, whether functions of the first ECU and the second ECU of the controller A are normal, or whether a fault occurs.

In the foregoing solution, the first ECU and the second ECU of the controller A belong to different computing platforms, the first ECU of the controller A detects the functional status of the second ECU of the controller A by itself, so that the first ECU of the controller A knows the functional status of the second ECU of the controller A, and the second ECU of the controller A detects the functional status of the first ECU of the controller A by itself, so that the second ECU of the controller A knows the functional status of the first ECU of the controller A. Therefore, even if a fault or failure that cannot be diagnosed by the first ECU of the controller A (for example, a fault or failure caused by a short circuit of a power supply, a communications module, an ADC, or a crystal oscillator) occurs in the first ECU of the controller A, the second ECU of the controller A can detect that the first ECU of the controller A is faulty; and similarly, even if a fault or failure that cannot be diagnosed by the second ECU of the controller A (for example, a fault or failure caused by a short circuit of a power supply, a communications module, an ADC, or a crystal oscillator) occurs in the second ECU of the controller A, the first ECU of the controller A can detect that the second ECU of the controller A is faulty, thereby enlarging fault diagnosis coverage.

In addition, in some embodiments, the first information is provided to the second ECU of the controller A through a first redundant communication channel. The first redundant communication channel may be, for example, but is not limited to, a redundant communication channel 660A shown in FIG. 6. Herein, the information is transmitted by using the redundant communication channel. This can improve reliability of information transmission and interaction on one hand, and is equivalent to adding a communication check on the other hand. Therefore, a communication fault can be distinguished from a function fault of the controller, and unnecessary turn-off of the actuator caused by misdiagnosing the communication fault as the function fault of the controller is reduced.

In addition, in some embodiments, the second information is provided to the first ECU of the controller A through a second redundant communication channel. The second redundant communication channel may be, for example, but is not limited to, a redundant communication channel 660A shown in FIG. 6. Herein, the information is transmitted by using the redundant communication channel. This can improve reliability of information transmission and interaction on one hand, and is equivalent to adding a communication check on the other hand. Therefore, a communication fault can be distinguished from a function fault of the controller, and unnecessary turn-off of the actuator caused by misdiagnosing the communication fault as the function fault of the controller is reduced.

In addition, in some embodiments, the first input signal is received by the first ECU and the second ECU of the controller A through a third redundant communication channel. The third redundant communication channel may be, for example, but is not limited to, a redundant communication channel 660C shown in FIG. 6. Herein, the input signal is transmitted by using the redundant communication channel. When an input signal transmitted by one communication channel in the redundant communication channel is incorrect, the ECU may further continue to use an input signal transmitted by another communication channel in the redundant communication channel. This can improve system redundancy and signal reliability.

In addition, in some embodiments, the second input signal is received by the first ECU and the second ECU of the controller A through a fourth redundant communication channel. The fourth redundant communication channel may be, for example, but is not limited to, a redundant communication channel 660D shown in FIG. 6. Herein, the input signal is transmitted by using the redundant communication channel. When an input signal transmitted by one communication channel in the redundant communication channel is incorrect, the ECU may further continue to use an input signal transmitted by another communication channel in the redundant communication channel. This can improve system redundancy and signal reliability.

In addition, in some embodiments, the monitoring method 450 may further include step S472. In step S472, when detecting that the function of the first ECU of the controller A is abnormal, the second ECU of the controller A sends a first fault notification to the first ECU of the controller A, where the first fault notification is used to indicate that the first ECU of the controller A is faulty. Herein, when detecting that the function of the first ECU of the controller A is abnormal, the second ECU of the controller A sends the fault notification to the first ECU of the controller A. Therefore, even if the first ECU of the controller A cannot detect that the first ECU of the controller A is faulty, the first ECU of the controller A can learn in time that a fault has occurred in the first ECU of the controller A.

In addition, in some embodiments, the monitoring method 450 may further include step S476. In step S476, when detecting that the function of the second ECU of the controller A is abnormal, the first ECU of the controller A sends a second fault notification to the second ECU of the controller A, where the second fault notification is used to indicate that the second ECU of the controller A is faulty. Herein, when detecting that the function of the second ECU of the controller A is abnormal, the first ECU of the controller A sends the fault notification to the second ECU of the controller A. Therefore, even if the second ECU of the controller A cannot detect that the second ECU of the controller A is faulty, the second ECU of the controller A can learn in time that a fault has occurred in the second ECU of the controller A.

In addition, in some embodiments, the monitoring method 450 may further include step S480 or step S484.

In step S480, when sending the first fault notification, the second ECU of the controller A outputs a first instruction signal to the first drive unit of the first actuator controlled by the first ECU of the controller A, where the first instruction signal instructs the first drive unit to perform a first operation on the first actuator. The first operation may be, for example, a fault protection operation mentioned in this specification. The first operation may include, for example, turning off the first actuator, degrading the first actuator, or restarting the first actuator. Herein, when detecting that the function of the first ECU of the controller A is abnormal, the second ECU of the controller A sends the instruction signal to the first drive unit of the first actuator controlled by the first ECU of the controller A, so that the first drive unit performs a corresponding fault protection operation on the first actuator. In this way, the first ECU of the controller A can be prevented from performing a dangerous operation, through the corresponding actuator, on an object controlled by the controller A because the first ECU of the controller A may not diagnose a fault or failure that has occurred in the first ECU of the controller A.

In step S484, if the first drive unit of the first actuator controlled by the first ECU of the controller A does not perform a corresponding operation within first predetermined duration after the first fault notification is sent, the second ECU of the controller A outputs a third instruction signal to the first drive unit, where the third instruction signal instructs the first drive unit to perform a third operation on the first actuator. Herein, if the first drive unit of the first actuator controlled by the first ECU of the controller A does not perform the corresponding operation within the predetermined duration after the second ECU of the controller A notifies the first ECU of the controller A that the first ECU of the controller A is faulty, the second ECU of the controller A sends the instruction signal to the first drive unit, so that the first drive unit performs a corresponding fault protection operation on the first actuator. In this way, when the first ECU of the controller A completely fails, the first actuator can be prevented from performing a dangerous operation on an object controlled by the controller.

In addition, in some embodiments, the monitoring method 450 may further include step S488 or step S492.

In step S488, when sending the second fault notification, the first ECU of the controller A outputs a second instruction signal to the second drive unit of the second actuator controlled by the second ECU of the controller A, where the second instruction signal instructs the second drive unit to perform a second operation on the second actuator. The second operation may be, for example, a fault protection operation mentioned in this specification. The second operation may include, for example, turning off the second actuator, degrading the second actuator, or restarting the second actuator. Herein, when detecting that the function of the second ECU of the controller A is abnormal, the first ECU of the controller A sends the instruction signal to the second drive unit of the second actuator controlled by the second ECU of the controller A, so that the second drive unit performs a corresponding fault protection operation on the second actuator. In this way, the second ECU of the controller A can be prevented from performing a dangerous operation, through the corresponding actuator, on an object controlled by the controller A because the second ECU of the controller A may not diagnose a fault or failure that has occurred in the second ECU of the controller A.

In step S492, if the second drive unit of the second actuator controlled by the second ECU of the controller A does not perform a corresponding operation within second predetermined duration after the second fault notification is sent, the first ECU of the controller A outputs a fourth instruction signal to the second drive unit, where the fourth instruction signal instructs the second drive unit to perform a fourth operation on the second actuator. Herein, if the second drive unit of the second actuator controlled by the second ECU of the controller A does not perform the corresponding operation within the predetermined duration after the first ECU of the controller A notifies the second ECU of the controller A that the second ECU of the controller A is faulty, the first ECU of the controller A sends the instruction signal to the second drive unit, so that the second drive unit performs a corresponding fault protection operation on the second actuator. In this way, when the second ECU of the controller A completely fails, the second actuator can be prevented from performing a dangerous operation on an object controlled by the controller.

In addition, in some embodiments, step S464 may include step S4642 and step S4644. In step S4642, the first ECU of the controller A calculates, based on the second input signal and the second information, a first status parameter of the device having the controller A. In step S4644, the first ECU of the controller A determines the functional status of the second ECU of the controller A based on the first status parameter and a first parameter threshold. For example, without limitation, when the device having the controller A is a vehicle and the controller A is a controller in an EPS system, the first status parameter may include, for example, but is not limited to, a yaw angular velocity and a centroid side-slip angle of the vehicle, and the first parameter threshold may include, for example, but is not limited to, a maximum allowed yaw angular velocity and a maximum allowed centroid side-slip angle of the vehicle at a current vehicle speed and a front wheel angle. Herein, the first ECU of the controller A detects the functional status of the second ECU of the controller A by using the status parameter of the device including the controller A. Therefore, the first ECU of the controller A can accurately determine whether the function of the second ECU of the controller A is faulty or fails. In addition, for calculation of the first status parameter or the like, refer to the following detailed descriptions.

In addition, in some embodiments, step S4642 includes: the first ECU of the controller A checks the second input signal and the second information; and when a check result indicates that the second input signal and the second information are valid, the first ECU of the controller A calculates the first status parameter based on the second input signal and the second information. Herein, the first ECU of the controller A checks validity of the used second input signal and second information. Therefore, wrong determining of the functional status of the second ECU of the controller A due to an invalid input signal can be prevented.

In addition, in some embodiments, step S468 may include step S4682 and step S4684. In step S4682, the second ECU of the controller A calculates, based on the first input signal and the first information, a second status parameter of the device having the controller A. In step S4684, the second ECU of the controller A determines the functional status of the first ECU of the controller A based on the second status parameter and a second parameter threshold. For example, without limitation, when the device having the controller A is a vehicle and the controller A is a controller in an EPS system, the second status parameter may include, for example, but is not limited to, a yaw angular velocity and a centroid side-slip angle of the vehicle, and the second parameter threshold may include, for example, but is not limited to, a maximum allowed yaw angular velocity and a maximum allowed centroid side-slip angle of the vehicle at a current vehicle speed and a front wheel angle. Herein, the second ECU of the controller A detects the functional status of the first ECU of the controller A by using the status parameter of the device including the controller A. Therefore, the second ECU of the controller A can accurately determine whether the function of the first ECU of the controller A is faulty or fails. Similarly, for calculation of the second status parameter or the like, refer to the following detailed descriptions.

In addition, in some embodiments, step S4682 includes: the second ECU of the controller A checks the first input signal and the first information; and when a check result indicates that the first input signal and the first information are valid, the second ECU of the controller A calculates the second status parameter based on the first input signal and the first information. Herein, the second ECU of the controller A checks validity of the used first input signal and first information. Therefore, wrong determining of the functional status of the first ECU of the controller A due to an invalid input signal can be prevented.

In addition, in some embodiments, the device having the controller A includes a vehicle, and step S4642 includes: the first ECU of the controller A calculates the first status parameter of the vehicle based on the second input signal and the second information by using one of the following: an electric power steering linearization model, a vehicle stability model, a motor model, the electric power steering linearization model and the vehicle stability model, the electric power steering linearization model and the motor model, the vehicle stability model and the motor model, and the electric power steering linearization model, the vehicle stability model, and the motor model. Herein, the status parameter of the vehicle is calculated by using the electric power steering linearization model, the vehicle stability model, and/or the motor model. Therefore, the status parameter of the vehicle can be accurately calculated.

In addition, in some embodiments, the device having the controller A includes a vehicle, and step S4682 includes: the second ECU of the controller A calculates the second status parameter of the vehicle based on the first input signal and the first information by using one of the following: an electric power steering linearization model, a vehicle stability model, a motor model, the electric power steering linearization model and the vehicle stability model, the electric power steering linearization model and the motor model, the vehicle stability model and the motor model, and the electric power steering linearization model, the vehicle stability model, and the motor model. Herein, the status parameter of the vehicle is calculated by using the electric power steering linearization model, the vehicle stability model, and/or the motor model. Therefore, the status parameter of the vehicle can be accurately calculated.

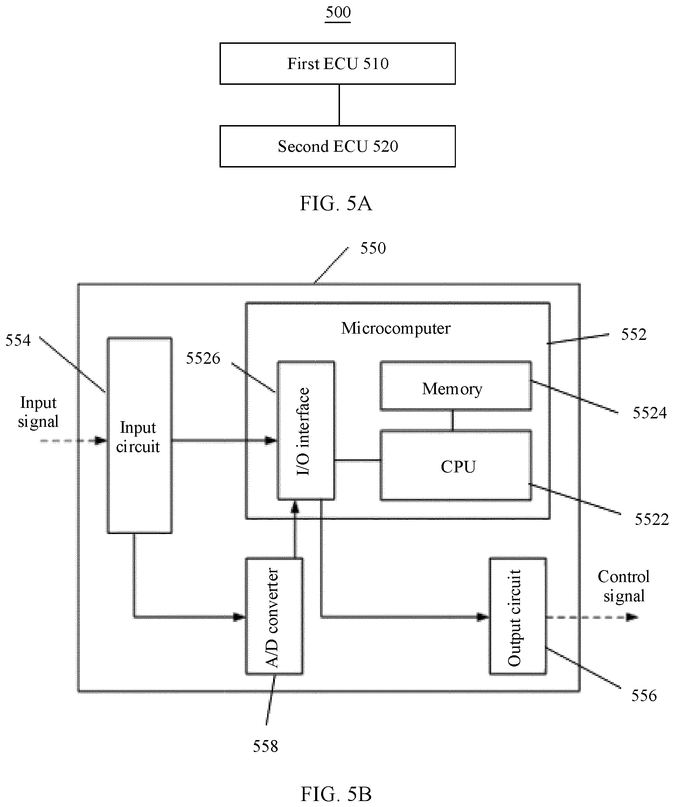

The foregoing describes the method embodiments of this application in detail with reference to FIG. 4A and FIG. 4B. The following describes apparatus embodiments of this application in detail with reference to FIG. 5A and FIG. 5B. It should be understood that descriptions of the apparatus embodiments correspond to descriptions of the method embodiments. Therefore, for parts not described in detail in the apparatus embodiments, refer to the foregoing method embodiments.

FIG. 5A is a schematic diagram of a controller according to an embodiment of this application. As shown in FIG. 5A, the controller 500 includes a first ECU 510 and a second ECU 520. The first ECU 510 and the second ECU 520 respectively perform operations performed by the first ECU of the controller A and operations performed by the second ECU of the controller A in the control method 400 shown in FIG. 4A.

The ECU is a control apparatus including integrated circuits and configured to implement a series of functions such as data analysis, processing, and sending. As shown in FIG. 5B, an embodiment of this application provides an ECU 550. The ECU 550 may include a microcomputer (microcomputer) 552, an input circuit 554, an output circuit 556, and an analog-to-digital (analog to digital converter, A/D) converter 558. The microcomputer 552 is connected to the input circuit 554 and the output circuit 556. The A/D converter 558 is connected to the microcomputer 552 and the input circuit 554.

A main function of the input circuit 554 is to preprocess an input signal (for example, a signal from a sensor), and a processing method varies depending on the input signal. Specifically, because there are two types of input signals: an analog signal and a digital signal, the input circuit may include an input circuit for processing an analog signal and an input circuit for processing a digital signal.

A main function of the A/D converter 558 is to convert an analog signal into a digital signal. After being preprocessed by the corresponding input circuit 554, the analog signal is input to the A/D converter 558 for processing, so that the analog signal is converted into a digital signal acceptable by the microcomputer 552. A person skilled in the art should understand that the A/D converter 558 may be omitted when all input signals are digital signals.

The output circuit 556 is an apparatus for establishing contact between the microcomputer 552 and an actuator. A function of the output circuit 556 is to convert a processing result sent by the microcomputer 552 into a control signal to drive the actuator to work. The output circuit 556 generally uses a power transistor, and controls, according to an instruction of the microcomputer, an electronic circuit of an actuation element by means of turn-on or cutoff.

The microcomputer 552 includes a central processing unit (central processing unit, CPU) 5522, a memory 5524, and an input/output (input/output, I/O) interface 5526. The CPU 5522 is connected to the memory 5524 and the I/O interface 5526 by using a bus, and information may be exchanged between the components by using the bus. The memory 5524 may be a memory such as a read-only memory (read-only memory, ROM) or a random access memory (random access memory, RAM). The I/O interface 5526 is a connection circuit for exchanging information between the CPU 5522 and the input circuit 554, the output circuit 556, or the A/D converter 558. Specifically, the I/O interface 5526 may be classified into a bus interface and a communications interface. The memory 5524 stores a computer program. The CPU 5522 may invoke the computer program in the memory 5524 to perform the control method 400 described in the embodiment corresponding to FIG. 4A. For example, the memory 5524 may be but is not limited to a random access memory, a flash memory, a read-only memory, a programmable read-only memory, an electrically erasable programmable memory, a magnetic disk, or an optical disc. The CPU 5522 may be but is not limited to a general purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or a transistor logic device, or a discrete hardware component. The general purpose processor may be a microprocessor, or the processor may be any conventional processor.

The following uses an EPS system of a vehicle as an example to describe in detail a specific implementation example of a control system in this application.

Document 1 (Standardized E-Gas Monitoring Concept for Gasoline and Diesel Engine Control Units-Version 6.0, 2015-07-13) discloses a three-level monitoring model used for an engine control unit, where the monitoring model includes a level 1 (function calculation level), a level 2 (function monitoring level), and a level 3 (controller monitoring level).

In a specific implementation example, a software and hardware function safety technology of a steering system of an autonomous vehicle at L3 or above is considered, and a redundant cross monitoring level and a redundant dual-system interaction mode are designed based on the three-level monitoring model disclosed in document 1. Therefore, fault diagnosis coverage of the EPS system in a same safety mechanism is wider, or adding few top-level safety mechanisms to the EPS system can achieve a same fault diagnosis effect and an ASIL level as using fewer bottom-level safety mechanisms.

FIG. 6 is a schematic diagram of an architecture of an EPS system according to a specific implementation example of this application. As shown in FIG. 6, the EPS system 600 includes a system A and a system B. The system A and the system B include identical modules, each having a signal input end, an ECU, and a redundant motor used as an actuator. The system A includes a signal input end 610A, an ECU 630A, a drive unit 645A, and a redundant motor 650A. The system B includes a signal input end 610B, an ECU 630B, a drive unit 645B, and a redundant motor 650B. The ECU 630A is connected to the signal input end 610A and the redundant motor 650A. The ECU 630B is connected to the signal input end 610B and the redundant motor 650B. The ECU 630A and the ECU 630B together form a controller of the EPS system 600.

Input signals provided by the signal input end 610A may include, for example, a sensor input signal, a vehicle input signal, and a system-A output of the drive unit 645A. Input signals provided by the signal input end 610B may include, for example, a sensor input signal, a vehicle input signal, and a system-B output of the drive unit 645B. The sensor input signal may include, for example, but is not limited to, a steering wheel torque and angle sensor (Torque and Angle Sensor, TAS) signal, a motor position sensor (Motor Position Sensor, MPS) signal, or the like. The vehicle input signal may be, for example, but is not limited to, a controller area network (Controller Area Network, CAN) signal. The system-A output may include, for example, a control signal (for example, but not limited to, a pulse width modulation signal of a voltage) output by the drive unit 645A to the redundant motor 650A, or a phase current output by the drive unit 645A to the redundant motor 650A. The system-B output may include, for example, a control signal (for example, but not limited to, a pulse width modulation signal of a voltage) output by the drive unit 645B to the redundant motor 650B, or a phase current output by the drive unit 645B to the redundant motor 650B.

Each of the ECU 630A and the ECU 630B includes three units. The ECU 630A includes a first application program (Application Program) unit 632A, a basic software (Basic Software) unit 640A, and a second application program unit 644A. The ECU 630B includes a first application program unit 632B, a basic software unit 640B, and a second application program unit 644B. Each of the first application program unit 632A and the first application program unit 632B has functions of the level 1 function calculation level and the level 2 function monitoring level in document 1. Each of the basic software unit 640A and the basic software unit 640B corresponds to the level 3 controller monitoring level in document 1.

Formed by the ECU 630A and the ECU 630B, the controller of the EPS system 600 further includes redundant communication channels 660A, 660C, and 660D, where the redundant communication channel 660A is used to connect the ECU 630A and the ECU 630B, the redundant communication channel 660C connects the signal input end 610A to the ECU 630A and the ECU 630B, and the redundant communication channel 660D connects the signal input end 610B to the ECU 630A and the ECU 630B. Each of the redundant communication channels 660A, 660C, and 660D includes at least two communication channels. Using the system A as an example, for a relationship between the units, refer to a signal transmission path from the signal input end to the controller. A redundant input signal (for example, a TAS signal, a CAN signal, an MPS signal, or a system-A output) provided by the signal input end 610A of the system A, as a signal input of the ECU 630A of the system A, enters the basic software unit 640A through the redundant communication channel 660C, so that the input signal is provided to the first application program unit 632A for use. Another input signal provided by the signal input end 610A of the system A enters the basic software unit 640B of the ECU 630B of the system B through the redundant communication channel 660C, so that the input signal is provided to the second application program unit 644B of the ECU 630B for use. In the first application program unit 632A of the ECU 630A, the received input signal is used to complete corresponding function calculation, to output information IA, where the information IA may include a control signal, or the control signal and a status parameter of a vehicle. The control signal included in the information IA is provided to the drive unit 645A to drive the redundant motor 650A. In addition, the information IA is first provided by the first application program unit 632A to the basic software unit 640B of the ECU 630B through the redundant communication channel 660A, and then provided by the basic software unit 640B to the second application program unit 644B. In addition, in the first application program unit 632A, the information IA output by the first application program unit 632A is further checked at a functional level by using a common-source input signal, to detect a functional status of the ECU 630A. The second application program unit 644B of the system B monitors the system A, that is, the second application program unit 644B of the system B uses the input signal from the signal input end 610A of the system A and the information IA from the first application program unit 632A of the ECU 630A together as an input of the second application program unit 644B of the system B, and based on a computing platform provided by the ECU 630B of the system B, the information IA output by the first application program unit 632A of the ECU 630A of the system A is checked at the functional level, to detect a functional status (for example, whether a fault occurs or whether a failure occurs) of the ECU 630A. Herein, information is transmitted between the ECU 630A and the ECU 630B by using the redundant communication channel 660A. This can improve reliability of information transmission and interaction on one hand, and is equivalent to adding a communication check on the other hand. Therefore, a communication fault can be distinguished from a function fault of the controller, and unnecessary turn-off of the actuator caused by misdiagnosing the communication fault as the function fault of the controller is reduced. The redundant communication channel 660C is used to provide a signal from an external sensor or the like to the ECU 630A and the ECU 630B. When a signal transmitted by one communication channel in the redundant communication channel is incorrect (for example, a TAS sensor has two torque signals, and one of the torque signals is incorrect), the ECU may further continue to use an input signal transmitted by another communication channel in the redundant communication channel. This can improve system redundancy and signal reliability.

The first application program unit 632A of the ECU 630A can monitor many faults of the ECU 630A itself. When monitoring the ECU 630A, the second application program unit 644B of the ECU 630B can detect some faults or failures that cannot be detected by the first application program unit 632A, where the fault or failure includes, for example, a fault or failure caused by a short circuit of a power supply, a communications module, an ADC, or a crystal oscillator. From a perspective of a hierarchy, monitoring logic of the first application program unit 632A is similar to that of the second application program unit 644B, and content monitored by the first application program unit 632A and the second application program unit 644B may be the same or different. When the monitored content is different, the second application program unit 644B may monitor, for example, a more macroscopic variable and status or a top-level status variable or status, for example, but not limited to monitoring some binary numbers or some states in a subsystem by the first application program unit 632A. The second application program unit 644B monitors some variables with relatively strong physical meanings in the system A.

Using the system B as an example, refer to a signal transmission path from the signal input end to the controller. A redundant input signal (for example, a TAS signal, a CAN signal, an MPS signal, or a system-B output) provided by the signal input end 610B of the system B, as a signal input of the ECU 630B of the system B, enters the basic software unit 640B through the redundant communication channel 660D, so that the input signal is provided to the first application program unit 632B for use. Another input signal provided by the signal input end 610B of the system B enters the basic software unit 640A of the ECU 630A of the system A through the redundant communication channel 660D, so that the input signal is provided to the second application program unit 644A of the ECU 630A for use. In the first application program unit 632B of the ECU 630B, the received input signal is used to complete corresponding function calculation, to output information IB, where the information IB may include a control signal, or the control signal and a status parameter of a vehicle. The control signal included in the information IB is provided to the drive unit 645B to drive the redundant motor 650B. In addition, the information IB is first provided by the first application program unit 632B to the basic software unit 640A of the ECU 630A through the redundant communication channel 660A, and then provided by the basic software unit 640A to the second application program unit 644A. In addition, in the first application program unit 632B, the information IB output by the first application program unit 632B is further checked at a functional level by using a common-source input signal, to detect a functional status of the ECU 630B. The second application program unit 644A of the system A monitors the system B, that is, the second application program unit 644A of the system A uses the input signal from the signal input end 610B of the system B and the information IB from the first application program unit 632B of the ECU 630B together as an input of the second application program unit 644A of the system A, and based on a computing platform provided by the ECU 630A of the system A, the information IB output by the first application program unit 632B of the ECU 630B of the system B is checked at the functional level, to detect a functional status (for example, whether a fault occurs or whether a failure occurs) of the ECU 630B.

The first application program unit 632B of the ECU 630B can monitor many faults of the ECU 630B itself. When monitoring the ECU 630B, the second application program unit 644A of the ECU 630A can detect some faults or failures that cannot be detected by the first application program unit 632B, where the fault or failure includes, for example, a fault or failure caused by a short circuit of a power supply, a communications module, an ADC, or a crystal oscillator. From a perspective of a hierarchy, monitoring logic of the first application program unit 632B is similar to that of the second application program unit 644A, and content monitored by the first application program unit 632B and the second application program unit 644A may be the same or different. When the monitored content is different, the second application program unit 644A may monitor, for example, a more macroscopic variable and status or a top-level status variable or status, for example, but not limited to monitoring some binary numbers or some states in a subsystem by the first application program unit 632B. The second application program unit 644A monitors some variables with relatively strong physical meanings in the system B.

For the system A, there are three fault protection operation channels (A1, A2, and A3) and one control instruction channel from the controller to the actuator. The failure protection operation is an operation related to safety, for example, an operation of turning off the motor, degrading the motor, or restarting the motor. The control instruction is a control signal output by the controller to the drive unit of the motor used as the actuator. The control instruction channel of the system A is used to provide the control signal output by the first application program unit 632A of the ECU 630A, to the drive unit 645A to drive the motor 650A. At the controller, there are three sources of fault protection operations on the redundant motor 650A: the basic software unit 640A of the ECU 630A, the first application program unit 632A of the ECU 630A, and the second application program unit 644B of the ECU 630B. The basic software unit 640A of the ECU 630A determines, by monitoring hardware (for example, but not limited to, a register, memory space, or the like) and basic software (for example, but not limited to, a time sequence of a program) of the ECU 630A, whether the ECU 630A is faulty or fails, and when the ECU 630A is faulty or fails, sends, to the basic software unit 640B of the ECU 630B through the redundant communication channel 660A, a fault notification used to indicate that the ECU 630A is faulty or fails and including fault information (cause) and a fault level, and outputs, to the drive unit 645A through the fault protection operation channel A1, an instruction signal that instructs the drive unit 645A to perform a fault protection operation corresponding to the fault level on the motor 650A. Alternatively, when receiving, from the second application program unit 644B of the ECU 630B, a fault notification used to indicate that the ECU 630A is faulty or fails and including fault information (cause) and a fault level, the basic software unit 640A outputs, to the drive unit 645A through the fault protection operation channel A1, an instruction signal that instructs the drive unit 645A to perform a fault protection operation corresponding to the fault level on the motor 650A. The basic software unit 640A of the ECU 630A can ensure reliability of the computing platform provided by the ECU 630A for the first application program unit 632A and the second application program unit 644A. The first application program unit 632A of the ECU 630A monitors a calculation result (that is, the information IA) of the first application program unit 632A of the ECU 630A by using the computing platform provided by the ECU 630A, and when the calculation result is abnormal, sends, to the basic software unit 640B of the ECU 630B through the redundant communication channel 660A, a fault notification used to indicate that the ECU 630A is faulty or fails and including fault information (cause) and a fault level, and outputs, to the drive unit 645A through the fault protection operation channel A2, an instruction signal that instructs the drive unit 645A to perform a fault protection operation corresponding to the fault level on the motor 650A. Based on the computing platform provided by the ECU 630B, the second application program unit 644B of the ECU 630B monitors a calculation result of the first application program unit 632A of the ECU 630A to detect a functional status of the ECU 630A, and when detecting that a function of the ECU 630A is abnormal, performs one of the following operation (I) and operation (II): (I) The second application program unit 644B of the ECU 630B sends, to the basic software unit 640A through the basic software unit 640B and the redundant communication channel 660A, a fault notification used to indicate that the ECU 630A is faulty or fails and including fault information (cause) and a fault level, and at the same time, the second application program unit 644B of the ECU 630B outputs, to the drive unit 645A through the fault protection operation channel A3, an instruction signal that instructs the drive unit 645A to perform a fault protection operation corresponding to the fault level on the motor 650A. (II) First, the second application program unit 644B of the ECU 630B sends, to the basic software unit 640A through the basic software unit 640B and the redundant communication channel 660A, a fault notification used to indicate that the ECU 630A is faulty or fails and including fault information (cause) and a fault level, then the second application program unit 644B of the ECU 630B monitors whether the drive unit 645A performs a corresponding fault protection operation on the redundant motor 650A, and if it is detected that the drive unit 645A does not perform the corresponding fault protection operation on the redundant motor 650A within predetermined duration, the second application program unit 644B of the ECU 630B outputs, to the drive unit 645A through the fault protection operation channel A3, an instruction signal that instructs the drive unit 645A to perform a fault protection operation corresponding to the fault level on the motor 650A. For example, the second application program unit 644B of the ECU 630B may first perform a redundancy check on the input signal and the information IA, and then after the redundancy check succeeds, monitor, according to a specific physical law and mathematical model, whether an overall function of the ECU 630A is normal.

For the system B, there are also three fault protection operation channels (B1, B2, and B3) and one control instruction channel from the controller to the actuator. The control instruction channel of the system B is used to provide the control signal output by the first application program unit 632B of the ECU 630B, to the drive unit 645B to drive the motor 650B. At the controller, there are three sources of fault protection operations on the redundant motor 650B: the basic software unit 640B of the ECU 630B, the first application program unit 632B of the ECU 630B, and the second application program unit 644A of the ECU 630A. The basic software unit 640B of the ECU 630B determines, by monitoring hardware (for example, but not limited to, a register, memory space, or the like) and basic software (for example, but not limited to, a time sequence of a program) of the ECU 630B, whether the ECU 630B is faulty or fails, and when the ECU 630B is faulty or fails, sends, to the basic software unit 640A of the ECU 630A through the redundant communication channel 660A, a fault notification used to indicate that the ECU 630B is faulty or fails and including fault information (cause) and a fault level, and outputs, to the drive unit 645B through the fault protection operation channel B1, an instruction signal that instructs the drive unit 645B to perform a fault protection operation corresponding to the fault level on the motor 650B. Alternatively, when receiving, from the second application program unit 644A of the ECU 630A, a fault notification used to indicate that the ECU 630B is faulty or fails and including fault information (cause) and a fault level, the basic software unit 640B outputs, to the drive unit 645B through the fault protection operation channel B1, an instruction signal that instructs the drive unit 645B to perform a fault protection operation corresponding to the fault level on the motor 650B. The basic software unit 640B of the ECU 630B can ensure the computing platform provided by the ECU 630B for the first application program unit 632B and the second application program unit 644B. The first application program unit 632B of the ECU 630B monitors a calculation result (that is, the information IB) of the first application program unit 632B of the ECU 630B by using the computing platform provided by the ECU 630B, and when the calculation result is abnormal, sends, to the basic software unit 640A of the ECU 630A through the redundant communication channel 660A, a fault notification used to indicate that the ECU 630B is faulty or fails and including fault information (cause) and a fault level, and outputs, to the drive unit 645B through the fault protection operation channel B2, an instruction signal that instructs the drive unit 645B to perform a fault protection operation corresponding to the fault level on the motor 650B. Based on the computing platform provided by the ECU 630A, the second application program unit 644A of the ECU 630A monitors a calculation result of the first application program unit 632B of the ECU 630B to detect a functional status of the ECU 630B, and when detecting that a function of the ECU 630B is abnormal, performs one of the following operation (I) and operation (II): (I) The second application program unit 644A of the ECU 630A sends, to the basic software unit 640B through the basic software unit 640A and the redundant communication channel 660A, a fault notification used to indicate that the ECU 630B is faulty or fails and including fault information (cause) and a fault level, and at the same time, the second application program unit 644A of the ECU 630A outputs, to the drive unit 645B through the fault protection operation channel B3, an instruction signal that instructs the drive unit 645B to perform a fault protection operation corresponding to the fault level on the motor 650B. (II) First, the second application program unit 644A of the ECU 630A sends, to the basic software unit 640B through the basic software unit 640A and the redundant communication channel 660A, a fault notification used to indicate that the ECU 630B is faulty or fails and including fault information (cause) and a fault level, then the second application program unit 644A of the ECU 630A monitors whether the drive unit 645B performs a corresponding fault protection operation on the redundant motor 650B, and if it is detected that the drive unit 645B does not perform the corresponding fault protection operation on the redundant motor 650B within predetermined duration, the second application program unit 644A of the ECU 630A outputs, to the drive unit 645B through the fault protection operation channel B3, an instruction signal that instructs the drive unit 645B to perform a fault protection operation corresponding to the fault level on the motor 650B. For example, the second application program unit 644A of the ECU 630A may first perform a redundancy check on the input signal and the information IB, and then after the redundancy check succeeds, monitor, according to a specific physical law and mathematical model, whether an overall function of the ECU 630B is normal.

From the actuator to the signal input end, for the system A, the drive unit 645A generates, based on the control signal output by the first application program 632A, the system-A output to be provided to the redundant motor 650A. In addition to being provided to the redundant motor 650A to drive the redundant motor 650A to perform a desired operation, the system-A output is further returned to the signal input end 610A by using a signal cable, to provide a basis for calculation by the controller in a next sampling period. For the system B, the drive unit 645B generates, based on the control signal output by the first application program 632B, the system-B output to be provided to the redundant motor 650B. In addition to being provided to the redundant motor 650B to drive the redundant motor 650B to perform a desired operation, the system-B output is further returned to the signal input end 610B by using a signal cable, to provide a basis for calculation by the controller in a next sampling period.

For the EPS system 600 shown in FIG. 6, a design idea of the EPS system 600 may be summarized as follows: (1) A second application program unit is disposed in each system to monitor and diagnose a peer system. (2) In the second application program unit, for example, a redundancy check is performed on an input signal, and whether an overall function of the peer system is normal is monitored according to a physical law and mathematical model. When a function of the peer system is abnormal, a fault protection operation channel is used to independently perform an operation such as turning off, degrading, or restarting a motor controlled by the peer system, to prevent a fault such as a steering loss, excessively small steering, reverse steering, or locked steering. (3) For each system, a monitoring function of a first application program unit of the local system and a second application program unit of the peer system are in a parallel relationship. The second application program unit of the peer system performs, on a computing platform provided by the peer system, a functional check on a calculation result of the first application program unit of the local system, and the first application program unit of the local system performs, on the computing platform provided by the local system, a functional check on the calculation result of the first application program unit of the local system. (4) A basic software unit of each system monitors, for example, a time sequence, a register, and memory space of a program of the local system, to ensure reliability of a computing platform used by the first application program unit and the second application program unit of the local system.

The following describes specific functions and operations of three units in an ECU in detail with reference to the accompanying drawings.

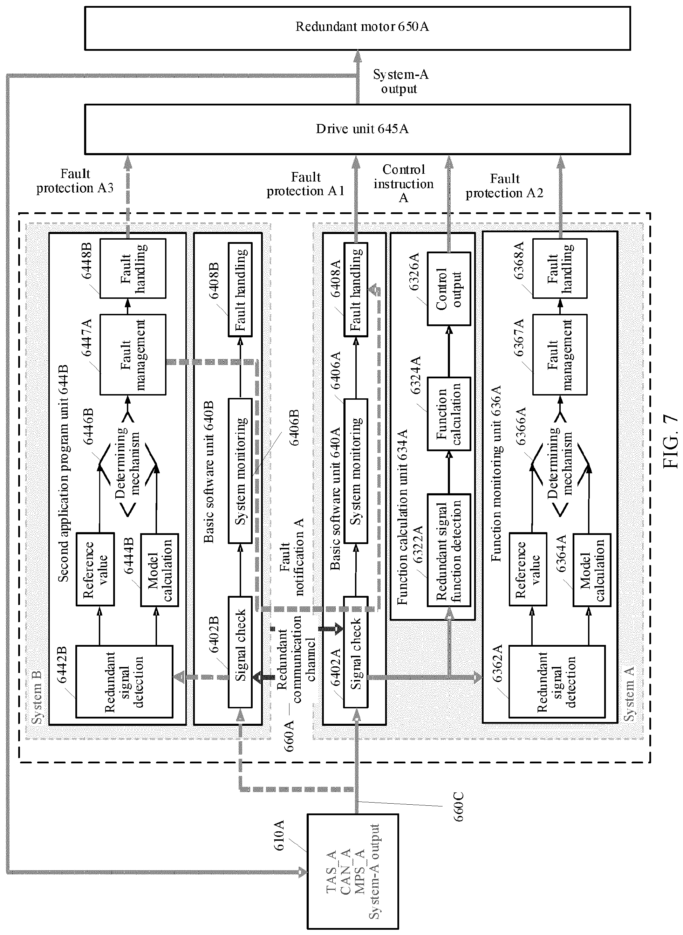

FIG. 7 is a detailed schematic diagram of the EPS system according to a specific implementation example of this application. FIG. 7 shows only parts related to monitoring of the system A. Parts related to monitoring of the system B are similar to the parts related to monitoring of the system A, and details are not described in this specification again.

As shown in FIG. 7, the parts related to monitoring of the system A include the first application program unit 632A and the basic software unit 640A in the ECU 630A of the system A, and the basic software unit 640B and the second application program unit 644B in the ECU 630B of the system B.

The first application program unit 632A includes a function calculation unit 634A and a function monitoring unit 636A.

The function calculation unit 634A may include a system management algorithm, a power control algorithm, a motor control algorithm, a calibration parameter, and the like, and update a control signal according to a requirement instruction. The function calculation unit 634A may be provided with a complete and detailed diagnostic policy and processing mechanism.

The function calculation unit 634A may include a signal detection module 6322A, a function calculation module 6324A, and a control output module 6326A.

The signal detection module 6322A receives, from the basic software unit 640A, an input signal (for example, but not limited to, a TAS signal, an MPS signal, a CAN signal, and/or a system output from the drive unit 645A) that is from the signal input end 610A of the system A and on which a signal check is successfully performed by the basic software unit 640A, and performs redundant signal detection on the received input signal. The redundant signal detection may include, for example, but is not limited to, a range check, constraint relationship detection, and/or life signal detection. The range detection is used to detect whether the input signal is within a defined valid range and/or whether an overflow occurs. The constraint relationship detection is used to detect whether two groups of input signals associated with each other meet a mathematical relationship. The life signal detection is used to detect whether a signal value is updated during communication. If a redundant signal detection result indicates that the received input signal is valid, the signal detection module 6322A sends the received input signal to the function calculation module 6324A.

After receiving the input signal from the signal detection module 6322A, the function calculation module 6324A performs calculation by using the received input signal and by using, for example, but not limited to, the system management algorithm, the power control algorithm, and/or the motor control algorithm, and updates the control signal according to the requirement instruction. In addition, the function calculation module 6324A may further calculate the status parameter of the vehicle by using the received input signal. Then the function calculation module 6324A provides the information IA to the control output module 6326A, where the information IA may include only the control signal, or the information IA may include the control signal and the calculated status parameter.

The control output module 6326A outputs the control signal included in the information IA received from the function calculation module 6324A to the drive unit 645A to drive the redundant motor 650A, so as to control the redundant motor 650A. In addition, the control output module 6326A further provides the received information IA to a signal detection module 6362A of the function monitoring unit 636A, and sends the information IA to a signal check module 6402B in the basic software unit 640B of the ECU 630B through the redundant communication channel 660A, so that after the information IA is successfully checked by the signal check module 6402B, the information IA is provided by the signal check module 6402B to the second application program unit 644B.

The function monitoring unit 636A is configured to monitor the function calculation unit 634A. A torque is monitored by using the input signal provided by the signal input end 610A of the system A, starting from a motor equation and a vehicle motion/dynamics equation, using the torque as an excitation and a speed/acceleration as a response, and comparing an actual torque and an allowed torque, where the actual torque comes from a sensor and a calculation method, and the allowed torque comes from a decision of the controller based on a system status. The function monitoring unit 636A can effectively monitor a running status of the function calculation unit 634A based on the following prerequisite: whether the function monitoring unit 636A is correct in principle, and whether a computing platform on which the function monitoring unit 636A depends during running is reliable. The former can be ensured through research, analysis, simulation, and the like in a program design. For the latter, reliability may be ensured by using the basic software unit 640A.

The function monitoring unit 636A includes the signal detection module 6362A, a model calculation module 6364A, a determining mechanism module 6366A, a fault management module 6367A, and a fault handling module 6368A.

The signal detection module 6362A receives, from the basic software unit 640A, an input signal (for example, but not limited to, a TAS signal, an MPS signal, a CAN signal, and/or a system output from the drive unit 645B) that is from the signal input end 610A of the system A and on which a signal check is successfully performed by the basic software unit 640A, receives the information IA from the control output module 6326A in the function calculation unit 634A, and performs redundant signal detection on the received input signal and information IA based on the provided complete and detailed diagnostic policy and processing mechanism. If a redundant signal detection result indicates that the received input signal and information IA are valid, the signal detection module 6362A sends the received input signal and information IA to the model calculation module 6364A. If the redundant signal detection result indicates that the received input signal or information IA is invalid, a fault management mode is entered.

After receiving the input signal and the information IA from the signal detection module 6362A, the model calculation module 6364 A calculates a current status parameter of the vehicle by using the received input signal and information IA and by using a corresponding mathematical model (for example, but not limited to, a vehicle dynamics model, an EPS linearization model, and/or a motor model), and provides the calculated current status parameter to the determining mechanism module 6366A. Herein, the calculated current status parameter of the vehicle may be different from the received input signal and information IA, or the calculated current status parameter of the vehicle may be the received input signal and information IA.

The determining mechanism module 6366A compares the current status parameter of the vehicle from the model calculation module 6364A with a parameter reference value. The parameter reference value may be a fixed value or a calibration MAP that varies with an input, or the parameter reference value may be a signal value (for example, for a motor control instruction A sent by an application program, a comparison needs to be made between an actual motor torque and the motor instruction to check whether unexpected acceleration, deceleration, or out-of-control occurs). If a comparison result indicates that the current status parameter is greater than the parameter reference value, it indicates that the ECU 630A is faulty or fails, and the fault management mode is entered.

In the fault management mode, the fault management module 6367A determines a fault level, sends the determined fault level to the fault handling module 6368A, and sends, to the basic software unit 640B of the ECU 630B through the redundant communication channel 660A, a fault notification used to indicate that the ECU 630A is faulty or fails and including fault information (cause) and the determined fault level.

After receiving the determined fault level from the fault management module 6367A, the fault handling module 6368A is configured to output instruction information to the drive unit 645A, to instruct the drive unit 645A to perform a fault protection operation corresponding to the determined fault level on the redundant motor 650A.

The basic software units 640A and 640B respectively ensure reliability of the computing platform provided by the ECU 630A and reliability of the computing platform provided by the ECU 630B. Therefore, the basic software units 640A and 640B respectively monitor software running and hardware devices of the ECU 630A and the ECU 630B. The monitoring includes monitoring the power supply, a communications module, memory, register, and a program flow, and monitoring a working status of the ECU as a whole by using a software and hardware watchdog. Each of the basic software units 640A and 640B has a fault protection operation channel for independently turning off, degrading, and restarting the ECU.

The basic software unit 640A includes a signal check module 6402A, a system monitoring module 6406A, and a fault handling module 6408A. The system monitoring module 6406A may include a memory read/write monitoring module, an ADC/input/output (Input/Output, IO) monitoring module, a communications module, a watchdog query/answer (Query/Answer, Q/A) module, a power supply check module, and a fault handling module.

The basic software unit 640B includes a signal check module 6402B, a system monitoring module 6406B, and a fault handling module 6408B. The system monitoring module 6406B may include a memory read/write monitoring module, an ADC/IO monitoring module, a communications module, a watchdog Q/A module, a power supply check module, and a fault handling module.

Because the modules in the basic software unit 640A and the modules in the basic software unit 640B perform the same functions, the following describes only the modules in the basic software unit 640A, and the modules in the basic software unit 640B are not described again.

The signal check module 6402A of the basic software unit 640A may receive an input signal (for example, but not limited to, a TAS signal, an MPS signal, and/or a CAN signal) from the signal input end 610A through the redundant communication channel 660C, perform a signal check on the received input signal, and when the signal check succeeds, send the received input signal to the signal detection module 6322A in the function calculation unit 634A of the first application program unit 632A and the signal detection module 6362A in the function monitoring unit 636A of the first application program unit 632A. Herein, the signal check may include, for example, but is not limited to, a rolling counter (Rolling Counter) check, a cyclic redundancy check (Cyclic Redundancy Check, CRC), and the like. The rolling counter check is used to check whether a frame is lost or a frame is missed, and the CRC is used to detect whether data of a sender is consistent with that of a receiver.

In addition, the signal check module 6402A of the basic software unit 640A may receive, from the ECU 630B through the redundant communication channel 660A, a fault notification used to indicate that the ECU 630A is faulty or fails and including fault information (cause) and a fault level, and a fault notification used to indicate that the ECU 630B is faulty or fails and including fault information (cause) and a fault level, perform a signal check on the received fault notification, and when the signal check succeeds, send the received fault notification to the fault handling module 6408A of the basic software unit 640A.

In addition, the signal check module 6402A of the basic software unit 640A may receive, through the redundant communication channel 660A, the information IB output by the first application program unit 632B of the ECU 630B, perform a signal check on the received information IB, and when the signal check succeeds, send the received information IB to the second application program unit 644A of the ECU 630A.

In addition, the signal check module 6402A of the basic software unit 640A may receive an input signal (for example, but not limited to, a TAS signal, an MPS signal, and/or a CAN signal) from the signal input end 610B through the redundant communication channel 660D, perform a signal check on the received input signal, and when the signal check succeeds, send the received input signal to the second application program unit 644A of the ECU 630A.

The memory read/write monitoring module in the system monitoring module 6406A is configured to test a random access memory (Random Access Memory, RAM), a read-only memory (Read-Only Memory, ROM), and a flash memory (Flash) used by a program in the ECU 630A during initialization, to check whether the RAM works normally, reliability of data stored in the ROM, and whether a read/write function is normal. The memory read/write monitoring module in the system monitoring module 6406A performs segment detection at intervals of several sampling periods. If an error occurs, the fault management mode is entered.

The ADC/IO monitoring module in the system monitoring module 6406A is configured to test whether the ADC and the IO module in the ECU 630A work normally, and whether the ADC and the IO control unit are configured correctly. If an ADC conversion error or IO output error occurs, the ECU 630A is reset, and the ECU 630A can be started only after the fault is rectified.

The communications module in the system monitoring module 6406A is configured to test whether a CAN communications module and an SPI communications module are normal, whether a baud rate is set correctly, whether the CAN communications module and the SPI communications module are configured correctly, whether communication of a safety monitoring chip (System Basis Chip, SBC) is normal, and the like.

The watchdog Q/A module in the system monitoring module 6406A is configured to test whether a watchdog timing and a time configuration of the ECU 630A are correct, monitor a real-time running environment of ECU hardware by using a Q/A mechanism for a system periodic test task, and if an error occurs, turn off the motor and reset the ECU. The Q/A periodically sends a specific test task to a target module. For example, the SBC chip sends a test task to the ECU. After receiving the test task, the target module outputs a test result based on a predetermined function and feeds back the test result to the sender. Then the SBC chip determines whether the program runs correctly and whether an unexpected running result exists. If the test result is success, the system enters a periodic running mode and a periodic test mode. If the running fails, the system reports a fault code and enters a fault mode.

The power supply check module in the system monitoring module 6406A is configured to test and determine whether voltage management of the ECU 630A is normal, whether a voltage at each key point is normal, and whether outputs of the SBC and a voltage stabilizer are normal. The power supply check module in the system monitoring module 6406A periodically performs power supply monitoring, voltage monitoring, current monitoring, temperature monitoring, speed monitoring, and torque monitoring.

If the foregoing modules in the system monitoring module 6406A pass the test, it indicates that each hardware module of the ECU 630A works normally, and that the system configuration is correct, and that a system running condition is met; therefore, the system can continue to run. If one or more of the foregoing modules fail the test, an error code provided by the module that fails the test needs to be recorded, and the system enters the fault management mode.

In the fault management mode, the fault handling module 6408A may determine a fault level, then output instruction information to the drive unit 645A, to instruct the drive unit 645A to perform a fault protection operation corresponding to the determined fault level on the redundant motor 650A, and send, to the basic software unit 640B of the ECU 630B through the redundant communication channel 660A, a fault notification used to indicate that the ECU 630A is faulty or fails and including fault information (cause) and the fault level.

In addition, if a fault notification that is from the ECU 630B and used to indicate that the ECU 630A is faulty or fails and includes fault information (cause) and a fault level is received, the fault handling module 6408A outputs instruction information to the drive unit 645A, to instruct the drive unit 645A to perform, on the redundant motor 650A, a fault protection operation corresponding to the fault level included in the received fault notification.

The second application program unit 644B of the ECU 630B monitors and checks the functional status of the ECU 630A based on the input signal from the signal input end 610A of the system A and the information IA from the first application program unit 632A in the ECU 630A of the system A. The second application program unit 644B has the following features. First, because the second application program unit 644B is located in the ECU 630B, and the ECU 630B is a computing platform different from the ECU 630A, when the ECU 630A cannot detect a fault or failure due to a short circuit of a power supply, a communications module, an ADC, and/or a crystal oscillator, or the like, the second application program unit 644B located in the ECU 630B can diagnose the fault, thereby reducing a residual fault or failure, and enlarging fault diagnosis coverage. Next, the first application program unit 632A in the ECU 630A provides the information IA to the second application program unit 644B through the redundant communication channel 660A. Therefore, the second application program unit 644B does not misdiagnose a communication fault as a function fault of the ECU 630A, but distinguishes the communication fault from the function fault through the redundant communication channel, thereby reducing unnecessary turn-off of the redundant motor caused by misdiagnosing the communication fault as the function fault. Furthermore, the second application program unit 644B has a fault protection operation channel for independently controlling the redundant motor 650A.

The second application program unit 644B includes a signal detection module 6442B, a model calculation module 6444B, a determining mechanism module 6446B, a fault management module 6447B, and a fault handling module 6448B.

The signal detection module 6442B receives, from the signal check module 6402B of the basic software unit 640B, an input signal (for example, but not limited to, a TAS signal, an MPS signal, and/or a CAN signal) that is from the signal input end 610A of the system A and on which a signal check is successfully performed by the basic software unit 640B and the information IA from the first application program unit 632A of the ECU 630A, and performs the foregoing redundant signal detection on the received input signal and information IA. If a redundant signal detection result indicates that the received input signal and information IA are valid, the signal detection module 6442B sends the received input signal and information IA to the model calculation module 6444B. If the check result indicates that the received input signal or information IA is invalid, the fault management mode is entered.

The model calculation module 6444B calculates the current status parameter of the vehicle by using the input signal and the information IA from the signal detection module 6442B, and provides the calculated status parameter to the determining mechanism module 6446B.

The determining mechanism module 6446B compares the status parameter received from the model calculation module 6444B with a parameter reference value. If a comparison result indicates that the received status parameter is greater than the parameter reference value, the fault management mode is entered.

In the fault management mode, the fault management module 6447B determines a fault level, sends the determined fault level to the fault handling module 6448B, and sends, to the signal check module 6402A of the basic software unit 640A of the ECU 630A through the basic software unit 640B and the redundant communication channel 660A, a fault notification used to indicate that the ECU 630A is faulty or fails and including fault information (cause) and the determined fault level, so that after the fault notification is successfully checked by the signal check module 6402A, the fault notification is provided by the signal check module 6402A to the fault handling module 6408A of the basic software unit 640A.

After receiving the determined fault level from the fault management module 6447B, the fault handling module 6448B may perform one of the following operation (I) and operation (II): (I) The fault handling module 6448B directly sends instruction information to the drive unit 645A through the fault protection operation channel A3, to instruct the drive unit 645A to perform a fault protection operation corresponding to the determined fault level on the redundant motor 650A. (II) After the fault management module 6447B sends the fault notification to the basic software unit 640A of the ECU 630A, the fault handling module 6448B starts to monitor the drive unit 645A, and if it is detected that the drive unit 645A does not perform a corresponding fault protection operation on the redundant motor 650A within predetermined duration, the fault handling module 6448B sends instruction information to the drive unit 645A through the fault protection operation channel A3, to instruct the drive unit 645A to perform a fault protection operation corresponding to the determined fault level on the redundant motor 650A.

FIG. 8 is a schematic diagram of the second application program unit according to a specific implementation example of this application. The following describes the second application program unit in more detail with reference to FIG. 8.

First, during power-on initialization, the system A and the system B respectively recheck faults existing in a previous ignition cycle of the vehicle, to detect whether the faults still exist. When the faults still exist, the system enters a corresponding fault state and reports a fault alarm, and performs a corresponding fault protection operation on the redundant motor. Next, during initialization, the system A and the system B interact with each other to detect the working statuses of the ECU 630A and the ECU 630B through the redundant communication channel 660A. Furthermore, during initialization, each of the system A and the system B determines whether it can effectively perform a fault protection operation on the peer system.

In an execution period of the controller, assuming that the system A monitors the system B, the second application program unit 644A of the system A receives, from the signal check module 6402A of the basic software unit 640A, an input signal from the signal input end 610B of the system B and information IB from the first application program unit 632B in the ECU 630B of the system B. Herein, the input signal may include a steering wheel torque signal B-StrTrq of the TAS, a phase current B-MotPhsCur, a phase voltage B-MotPhsVolt, and a motor rotation speed B-MPSRotSpd of the redundant motor 650B, and a CAN signal (B-vehicle speed and B-slip rate), and the information IB may include a control signal B-MotTrqReq. Alternatively, the input signal may include a steering wheel torque signal B-StrTrq of the TAS, an MPS, and a CAN signal (B-vehicle speed and B-slip rate), and the information IB may include a control signal B-MotTrqReq, and a phase current B-MotPhsCur, a phase voltage B-MotPhsVolt, and a motor rotation speed B-MPSRotSpd of the redundant motor 650B, where the phase current B-MotPhsCur, the phase voltage B-MotPhsVolt, and the motor rotation speed B-MPSRotSpd of the redundant motor 650B included in the information IB are status parameters of the vehicle that are calculated by the first application program unit 632B in the ECU 630B of the system B. After the signal detection module 6442A performs redundant signal detection on the input signal and the information IB and the redundant signal detection succeeds, the model calculation module 6444A may estimate a front wheel angle δ, a steering wheel absolute angle StrAng, and a steering wheel angular velocity StrAngVel of the vehicle based on the steering wheel torque signal B-StrTrq and the control signal B-MotTrqReq and by using a state space equation of the EPS dynamics model. Then the estimated parameters and the received CAN signal (B-vehicle speed and B-slide rate) are used as an input of a state space equation of a vehicle stability model, and a yaw angular velocity ωᵣand a centroid side-slip angle β in a current status of the vehicle can be obtained. The determining mechanism module 6446A compares the yaw angular velocity ωᵣand the centroid side-slip angle β with a maximum allowed yaw angular velocity ω_{r_max} and a maximum allowed centroid side-slip angle βₘₐₓ at the current front wheel angle δ, to determine whether the current vehicle is unstable or is about to be unstable. If a determining result indicates that the vehicle is unstable or is about to be unstable (that is, if (err == 1)), the determining mechanism module 6446A performs positive fault counting (that is, {x_ErrCnt++;}) by using a fault counter. If the determining result indicates that the vehicle is not unstable or is not about to be unstable (that is, if (err == 0)), the determining mechanism module 6446A performs negative fault counting (that is, {x_ErrCnt--;}) by using the fault counter. If a count value of the fault counter exceeds a specified critical value, the determining mechanism module 6446A confirms that the ECU 630B is faulty or fails. Therefore, the fault management mode is entered. In addition, in the execution period of the controller, after a Clark transformation and a Park transformation in motor FOC are performed on the phase current B-MotPhsCur, the phase voltage B-MotPhsVolt, and the motor rotation speed B-MPSRotSpd of the redundant motor 650B to obtain id and iq currents, and a torque value MotTrq output by the motor in the current status may be obtained by combining the id and iq currents with a motor constant. The determining mechanism module 6446A compares the obtained torque value MotTrq with a torque value indicated by the control signal B-MotTrqReq included in the received information IB. If a comparison result indicates that the two are different, the determining mechanism module 6446A determines that the ECU 630B is faulty or fails (that is, if (err == 1)), and the fault management mode is entered, to avoid unexpected problems of insufficient steering, excessively large steering, locked steering, and no steering of the vehicle.

The EPS dynamics model is shown in a formula (1): $\left[\begin{matrix}{θ}_{s}^{′} \\ {θ}_{s}^{"} \\ {θ}_{p}^{′} \\ {θ}_{p}^{"} \\ {θ}_{m}^{′} \\ {θ}_{m}^{"}\end{matrix}\right] = \left[\begin{matrix}\begin{matrix}0 & 1 \\ - \frac{{K}_{c}}{{J}_{s}} & - \frac{{B}_{s} + {B}_{c}}{{J}_{s}}\end{matrix} \begin{matrix}0 & 0 \\ \frac{{K}_{c}}{{J}_{s}} & \frac{{B}_{c}}{{J}_{s}}\end{matrix} \begin{matrix}0 & 0 \\ 0 & 0\end{matrix} \\ \begin{matrix}0 & 0 & 0 & 1 & 0 & 0 \\ \frac{{K}_{c} {η}_{r}}{{J}_{r _ ref}} & \frac{{B}_{c} {η}_{r}}{{J}_{r _ ref}} & \frac{- \left({K}_{c}{η}_{r}+{K}_{b}{t}_{m}{η}_{b}{η}_{s}+{K}_{t _ ref}\right)}{{J}_{r _ ref}} & \frac{- \left({B}_{c}{η}_{r}+{B}_{r _ ref}+{B}_{t _ ref}+{B}_{b}{t}_{m}{η}_{b}{η}_{s}\right)}{{J}_{r _ ref}} & \frac{{K}_{b} {η}_{b} {η}_{s}}{{J}_{r _ ref}} & \frac{{B}_{b} {η}_{b} {η}_{s}}{{J}_{r _ ref}}\end{matrix} \\ \begin{matrix}0 & 0 \\ 0 & 0\end{matrix} \begin{matrix}0 & 0 \\ \frac{{K}_{b}}{{J}_{m}} & \frac{{B}_{b}}{{J}_{m}}\end{matrix} \begin{matrix}0 & 1 \\ - \frac{{K}_{b}}{{J}_{m} {t}_{m}} & - \frac{{B}_{m} {t}_{m} + {B}_{b}}{{J}_{m} {t}_{m}}\end{matrix}\end{matrix}\right] \left[\begin{matrix}{θ}_{s} \\ {θ}_{s}^{′} \\ {θ}_{p} \\ {θ}_{p}^{′} \\ {θ}_{m} \\ {θ}_{m}^{′}\end{matrix}\right] + \left[\begin{matrix}0 & 0 \\ \frac{1}{{J}_{s}} & 0 \\ 0 & 0 \\ 0 & 0 \\ 0 & 0 \\ 0 & \frac{1}{{J}_{m}}\end{matrix}\right] \left[\begin{matrix}{T}_{d} \\ {T}_{m}\end{matrix}\right]$

In the formula (1), T_{d} is a steering wheel torque, Tₘ is a motor output torque, Jₛ is steering wheel rotation inertia, Jₘ is motor rotation inertia, θₛis the steering wheel angle, θₚis a pinion gear angle, θₘis a motor angle, J_{r_ref} is pinion rack equivalent rotation inertia, B_{r_ref} is a pinion rack equivalent damping factor, B_{t_ref} is a tire equivalent damping factor, ηᵣis gear rack steering device transmission efficiency, η_{b}is belt efficiency, and ηₛis screw efficiency. B_{b} is Belt transmission ratio = Quantity of bull gears/Quantity of pinion gears, iₘ is a steering angle transmission ratio, K_{c} is steering column stiffness, B_{c} is a steering column damping factor, Bₛ is a steering wheel damping factor, K_{t_ref} is equivalent tire stiffness, is tire stiffness/steering angle transmission ratio, and K_{b} is belt stiffness.

The vehicle stability equation is shown in a formula (2): $\begin{matrix}{\dot{ω}}_{r} = \frac{{a}^{2} {k}_{1} + {b}^{2} {k}_{2}}{{I}_{z} u} {ω}_{r} + \frac{{ak}_{1} - {bk}_{2}}{{I}_{z}} β - \frac{{ak}_{1}}{{I}_{z}} δ \\ \dot{β} = \left(\frac{{ak}_{1} - {bk}_{2}}{{mu}^{2}}\right) {ω}_{r} + \frac{{k}_{1} + {k}_{2}}{mu} β - \frac{{k}_{1}}{mu} δ\end{matrix}$

In the formula (2), m is total mass of the vehicle, I_{z} is inertia of the vehicle around a z-axis, u is a longitudinal speed of the vehicle, a is a distance from a centroid to a front axis, b is a distance from the centroid to a rear axis, k₁ is total cornering stiffness of a front wheel, k₂ is cornering stiffness of a rear wheel, ωᵣis the yaw angular velocity, and β is the centroid side-slip angle.

The following technical effects are achieved according to the solution in the foregoing specific implementation example of this application. First, the second application program unit for redundant cross monitoring is added, so that an input signal and status information of the peer system can enter the local system for calculation and determining. Based on different computing platforms, a behavior of the peer system is checked at a functional level, so that fault diagnosis coverage is enlarged. Next, dual-system cross-monitoring is used to add few top-level safety mechanisms and control a plurality of variables, so that a total quantity of safety mechanisms of the system is reduced while the system can reach the same safety level. In addition, based on redundancy of different computing platforms, faults that are caused by a short circuit of a power supply, a communications module, an ADC, and/or a crystal oscillator and cannot be detected by the local system can be detected, and residual failures can be reduced. Furthermore, redundant communication channels are used to improve reliability of data exchange between the two redundant systems. A communication check is added to distinguish a communication fault from a controller function fault, so that unnecessary turn-off of the EPS is reduced.

In comparison with the prior art, in the solution of the foregoing specific implementation example of this application, in a second application program unit of a local system, data from the signal input end of the peer system and information exchanged with the controller are introduced, and a current status of the peer system and a control output are checked from a functional level (EPS dynamics, vehicle stability equation, motor equation, or the like) by using a computing platform different from the peer system, so that an unexpected steering wheel out-of-control problem can be avoided from a technical level.

In the prior art, a fault code determined by a peer system is introduced in most dual-system interaction. If communication fails, information related to the peer system is lost, and a residual fault problem cannot be resolved. If a signal from a signal input end of a local system and a signal exchanged with the controller of the peer system are introduced into a second application program unit of the local system, and a problem occurs on a computing platform of the local system or a computing platform of the peer system (in terms of hardware), for example, due to a power supply, a crystal oscillator, a register, or a RAM jump, it is difficult to accurately determine a fault cause, and a residual fault is likely to occur. Therefore, the comparison process is more objective and referenceable by introducing a common-source signal to different computing platforms at a check level.

A person skilled in the art should understand that, in the foregoing specific implementation example, although the first application program units 632A and 632B correspond to a combination of the level 1 function calculation level and the level 2 function monitoring level in document 1, that is, the first application program units 632A and 632B include functions of the level 1 function calculation level and the level 2 function monitoring level in document 1, this application is not limited thereto. In some other implementations of this application, the first application program units 632A and 632B may correspond to, for example, only the level 1 function calculation level in document 1, that is, the first application program units 632A and 632B include only the functions of the level 1 function calculation level in document 1.

A person skilled in the art should understand that, although in the foregoing specific implementation example, the basic software unit performs a signal check on the input signal and the information, and the first application program unit and the second application program unit perform redundant signal detection on the input signal and/or the information, this application is not limited thereto. In some other implementations of this application, the signal check and redundant signal detection on the input signal and information are both performed in the basic software unit, or are performed in the first application program unit and the second application program unit. Alternatively, in some other implementations of this application, none of the basic software unit, the first application program unit, and the second application program unit may have functions of performing the signal check and redundant signal detection on the input signal and information.

A person skilled in the art should understand that, although in the foregoing specific implementation example, the controller formed by the ECU 630A and the ECU 630B includes redundant communication channels 660A, 660C, and 660D, this application is not limited thereto. In some other implementations of this application, the controller may not include the redundant communication channel 660A, redundant communication channel 660C, and/or redundant communication channel 660D.

The following describes function safety and FMEDA analysis.

In the solutions of the embodiments of this application, a top-level safety mechanism (Safety Mechanism, SM) is added, and a plurality of lower-level variables can be controlled from the functional level. For example, hardware elements that are prone to a fault or failure in a system include a relay, a bundle, a sensor, an actuator, a CPU, a digital signal, an analog signal, an MVM, a RAM, a power supply, and the like.

Each safety mechanism requires software and hardware costs. The safety mechanism introduces a diagnostic circuit and a quantity of transistors in terms of hardware, and consumes CPU resources and affects real-time performance and an amount of computation in terms of software. In addition, an increase of safety mechanisms causes system complexity and may introduce other risks.

FMEDA analysis is performed on the system. Assuming that the system meets a prerequisite of same hardware measurement and that safety mechanisms are set at different levels, the safety mechanisms established for basic software or hardware are more concentrated on specific components than those at an application layer, and are not sufficiently macroscopic.

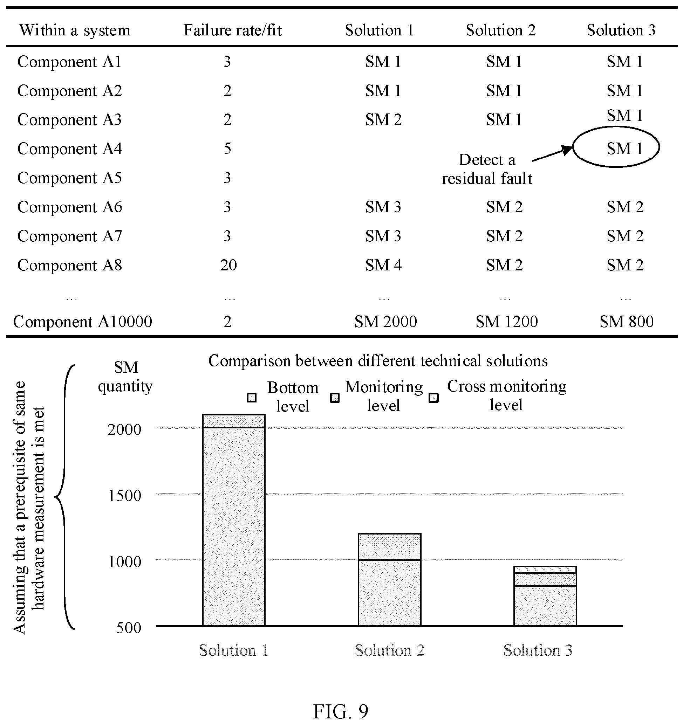

As shown in FIG. 9, a comparison between solution 1 and solution 2 indicates that, by adding few safety mechanisms of monitoring modules to the system, a majority of bottom-level safety mechanisms can be reduced under the prerequisite of the same hardware measurement. A comparison between solution 3 and solution 1 shows that the second application program unit for redundant cross monitoring is added in the system A and the system B to monitor the peer system. Because the second application program unit is at a higher level, by establishing several safety mechanisms in the second application program unit, a total quantity of safety mechanisms can be greatly reduced, and costs can be reduced.

It can be learned that, to achieve a same ASIL level and achieve three hardware indicators, a large quantity of safety mechanisms need to be implemented in a single system, and both hardware costs and software costs are increased, resulting in an increase of risks and complexity. Introduction of the second application program unit can alleviate this problem. In terms of hardware, a quantity of detection circuits is reduced, and the costs are also reduced. Software complexity is reduced, CPU load is reduced, and the risks are also reduced.

A person of ordinary skill in the art may be easily aware that units and algorithm steps in the examples described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, the division of units is merely logical function division and may be other division in actual implementation. For example, a plurality of units or components may be combined or integrated into another system, or some features may be ignored or may not be performed. In addition, the displayed or discussed mutual couplings or direct couplings or communications connections may be implemented by using some interfaces. The indirect couplings or communications connections between apparatuses or units may be implemented in electrical, mechanical, or other forms.

The units described as separate parts may or may not be physically separate and parts displayed as units may or may not be physical units, meaning that they may be located in one position or distributed on a plurality of network elements. Some or all of the units may be selected based on an actual requirement, to achieve the objectives of the solutions in the embodiments.

In addition, functional units in the embodiments of this application may be integrated into one processing unit, or each of the units may exist alone physically, or two or more units may be integrated into one unit.

When the functions are implemented in a form of a software functional unit and sold or used as a separate product, the functions may be stored in a computer-readable storage medium. Based on such an understanding, the technical solutions of this application substantially or parts making contributions to the prior art or part of the technical solutions may be embodied in a form of a software product, and the computer software product is stored in a storage medium, including a plurality of instructions configured to enable a computer device (which may be a personal computer, a server, a network device or the like) to execute all or part of the steps of the method in each embodiment of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

An embodiment of this embodiment further provides a computer-readable storage medium. The computer-readable storage medium stores a computer program. When the computer program is executed by an ECU, the ECU is enabled to perform the control method 400 shown in FIG. 4A.

The computer-readable storage medium in this embodiment of this application may be any combination of one or more computer-readable media. The computer-readable storage medium may be a computer-readable signal medium or a computer-readable storage medium. The computer-readable storage medium may be, for example, but not limited to, an electric, magnetic, optical, electromagnetic, infrared, or semi-conductor system, apparatus, or device, or any combination thereof. More specific examples (a non-exhaustive list) of the computer-readable storage medium include: an electrical connection having one or more conducting wires, a portable computer disk, a hard disk, a RAM, a ROM, an erasable programmable read-only memory (Electrically Erasable Programmable read only memory, EPROM), an optical fiber, a portable compact disc read-only memory (Compact Disc Read-Only Memory, CD-ROM), an optical storage device, a magnetic storage device, or any appropriate combination thereof. In this specification, the computer-readable storage medium may be any tangible medium containing or storing a program. The program may be used by an instruction execution system, apparatus, or device, or may be used in combination with an instruction execution system, apparatus, or device.

The computer-readable signal medium may include a data signal propagated in a baseband or as part of a carrier, where the data signal carries computer-readable program code. The propagated data signal may be in a plurality of forms, including but not limited to an electromagnetic signal, an optical signal, or any appropriate combination thereof. The computer-readable signal medium may alternatively be any computer-readable medium other than the computer-readable storage medium. The computer-readable medium may send, propagate, or transmit the program used by the instruction execution system, apparatus, or device, or used in combination with the instruction execution system, apparatus, or device.

The program code contained in the computer-readable medium may be transmitted by using any appropriate medium, including but not limited to radio, an electric wire, an optical cable, a radio frequency (Radio Frequency, RF), or any appropriate combination thereof.

An embodiment of this application further provides a computer program. When the computer program is executed by an ECU, the ECU is enabled to perform the control method 400 shown in FIG. 4A.

The computer program used to perform operations in this application may be compiled in one or more programming languages or a combination thereof. The programming language includes, for example, but is not limited to, an object-oriented programming language such as Java, Smalltalk, or C++, and further includes a conventional procedural programming language such as a "C" language or a similar programming language. The computer program may be executed completely on a user computer, partially on a user computer, as an independent software package, partially on a user computer and partially on a remote computer, or completely on a remote computer or server. In a case involving a remote computer, the remote computer may be connected to a user computer through any type of network, including a local area network (Local Area Network, LAN) or a wide area network (Wide Area Network, WAN), or may be connected to an external computer (for example, connected through the Internet by using an Internet service provider).

It should be noted that the foregoing descriptions are merely some embodiments of this application and technical principles applied to the embodiments. A person skilled in the art understands that the present invention is not limited to the specific embodiments described herein, and a person skilled in the art can make various obvious changes, readjustments, and replacements without departing from the protection scope of the present invention. Therefore, although this application is described in detail by using the foregoing embodiments, the present invention is not limited to the foregoing embodiments, and more other equivalent embodiments may be included without departing from the concept of the present invention. All such embodiments shall fall within the protection scope of the present invention, which is defined by the claims.

## Claims

1. A control method, wherein the control method is used by a first electronic control unit to monitor a second electronic control unit, and the control method comprises:
receiving (S402; S452), by the first electronic control unit, a first input signal and a second input signal, wherein the first input signal and the second input signal comprise sensor-derived data;
outputting (S406; S456), by the first electronic control unit, a first output signal based on the first input signal, and providing the first output signal to the second electronic control unit, wherein the first output signal comprises a first control signal to be provided to a first drive unit of a first actuator controlled by the first electronic control unit;
receiving (S410), by the first electronic control unit, a second output signal from the second electronic control unit, wherein the second output signal is output by the second electronic control unit based on the second input signal, and wherein the second output signal comprises a second control signal to be provided to a second drive unit of a second actuator controlled by the second electronic control unit; and
detecting (S414; S464), by the first electronic control unit, a functional status of the second electronic control unit based on the second input signal and the second output signal,
wherein the first output signal is to be used by the second electronic control unit to detect (S468) a functional status of the first electronic control unit based on the first input signal and the first output signal.

2. The control method according to claim 1, wherein
the first output signal is provided to the second electronic control unit through a first redundant communication channel.

3. The control method according to claim 1 or 2, wherein
the second output signal is received by the first electronic control unit through a second redundant communication channel.

4. The control method according to any one of claims 1 to 3, wherein
the first input signal is received by the first electronic control unit through a third redundant communication channel.

5. The control method according to any one of claims 1 to 4, wherein
the second input signal is received by the first electronic control unit through a fourth redundant communication channel.

6. A monitoring method for a controller, wherein the controller comprises a first electronic control unit and a second electronic control unit, and the monitoring method comprises:
performing the control method of claim 1 by the first electronic control unit;
receiving (S452), by the second electronic control unit, the first input signal and the second input signal;
receiving, by the second electronic control unit, the first output signal based on the first input signal provided by the first electronic control unit;
outputting (S460), by the second electronic control unit, the second output signal based on the second input signal, and providing the second output signal to the first electronic control unit; and
detecting (S468), by the second electronic control unit, the functional status of the first electronic control unit based on the first input signal and the first output signal from the first electronic control unit.

7. The monitoring method according to claim 6, wherein
the first output signal is provided to the second electronic control unit through a first redundant communication channel.

8. The monitoring method according to claim 6 or 7, wherein
the second output signal is provided to the first electronic control unit through a second redundant communication channel.

9. The monitoring method according to any one of claims 6 to 8 wherein
the first input signal is received by the first electronic control unit and the second electronic control unit through a third redundant communication channel.

10. The monitoring method according to any one of claims 6 to 9, wherein
the second input signal is received by the first electronic control unit and the second electronic control unit through a fourth redundant communication channel.

11. An electronic control unit, comprising:
a microcomputer;
an input circuit, configured to preprocess an input signal, and provide the processed input signal to the microcomputer; and
an output circuit, configured to convert a processing result sent by the microcomputer into a control signal for outputting, wherein
the microcomputer comprises:
an input/output interface, connected to a bus, the input circuit, and the output circuit;
a processor, connected to the bus; and
a memory, connected to the bus, wherein the memory stores a computer program, and when the computer program is executed by the processor, the processor is enabled to perform the control method according to any one of claims 1 to 5.

12. A controller (134), comprising:
a first electronic control unit; and
a second electronic control unit, wherein
the first electronic control unit and the second electronic control unit respectively perform the operations performed by the first electronic control unit and the operations performed by the second electronic control unit in the monitoring method according to any one of claims 6 to 10.

13. A control system (130), comprising:
the controller (134) according to claim 12;
a first input end (132), configured to receive the first input signal, and send the received first input signal to the first electronic control unit and the second electronic control unit in the controller separately;
a second input end, configured to receive the second input signal, and send the received second input signal to the second electronic control unit and the first electronic control unit in the controller separately;
the first drive unit (135), connected to the first electronic control unit and the second electronic control unit; and
the second drive unit, connected to the first electronic control unit and the second electronic control unit.

14. A vehicle (100), wherein the vehicle comprises the control system (130) according to claim 13.

15. A computer-readable storage medium, wherein the computer-readable storage medium stores a computer program, and when the computer program is executed by an electronic control unit, the electronic control unit is enabled to perform the control method according to any one of claims 1 to 5.

## Patentansprüche

1. Steuerungsverfahren, wobei das Steuerungsverfahren durch eine erste elektronische Steuereinheit verwendet wird, um eine zweite elektronische Steuereinheit zu überwachen, und das Steuerungsverfahren Folgendes umfasst:
Empfangen (S402; S452) eines ersten Eingangssignals und eines zweiten Eingangssignals durch die erste elektronische Steuereinheit, wobei das erste Eingangssignal und das zweite Eingangssignal von Sensoren abgeleitete Daten umfassen;
Ausgeben (S406; S456) eines ersten Ausgangssignals durch die erste elektronische Steuereinheit basierend auf dem ersten Eingangssignal und Bereitstellen des ersten Ausgangssignals an die zweite elektronische Steuereinheit, wobei das erste Ausgangssignal ein erstes Steuersignal umfasst, das einer ersten Antriebseinheit eines ersten Aktuators, der durch die erste elektronische Steuereinheit gesteuert wird, bereitzustellen ist;
Empfangen (S410) eines zweiten Ausgangssignals von der zweiten elektronischen Steuereinheit durch die erste elektronische Steuereinheit, wobei das zweite Ausgangssignal durch die zweite elektronische Steuereinheit basierend auf dem zweiten Eingangssignal ausgegeben wird und wobei das zweite Ausgangssignal ein zweites Steuersignal umfasst, das einer zweiten Antriebseinheit eines zweiten Aktuators, der durch die zweite elektronische Steuereinheit gesteuert wird, bereitzustellen ist; und
Detektieren (S414; S464) eines Funktionsstatus der zweiten elektronischen Steuereinheit durch die erste elektronische Steuereinheit basierend auf dem zweiten Eingangssignal und dem zweiten Ausgangssignal,
wobei das erste Ausgangssignal durch die zweite elektronische Steuereinheit zu verwenden ist, um einen Funktionsstatus der ersten elektronischen Steuereinheit basierend auf dem ersten Eingangssignal und dem ersten Ausgangssignal zu detektieren (S468).

2. Steuerungsverfahren nach Anspruch 1, wobei
das erste Ausgangssignal der zweiten elektronischen Steuereinheit über einen ersten redundanten Kommunikationskanal bereitgestellt wird.

3. Steuerungsverfahren nach Anspruch 1 oder 2, wobei
das zweite Ausgangssignal durch die erste elektronische Steuereinheit über einen zweiten redundanten Kommunikationskanal empfangen wird.

4. Steuerungsverfahren nach einem der Ansprüche 1 bis 3, wobei das erste Eingangssignal durch die erste elektronische Steuereinheit über einen dritten redundanten Kommunikationskanal empfangen wird.

5. Steuerungsverfahren nach einem der Ansprüche 1 bis 4, wobei das zweite Eingangssignal durch die erste elektronische Steuereinheit über einen vierten redundanten Kommunikationskanal empfangen wird.

6. Überwachungsverfahren für ein Steuergerät, wobei das Steuergerät eine erste elektronische Steuereinheit und eine zweite elektronische Steuereinheit umfasst, und das Überwachungsverfahren Folgendes umfasst:
Durchführen des Steuerungsverfahrens nach Anspruch 1 durch die erste elektronische Steuereinheit;
Empfangen (S452) des ersten Eingangssignals und des zweiten Eingangssignals durch die zweite elektronische Steuereinheit;
Empfangen des ersten Ausgangssignals durch die zweite elektronische Steuereinheit basierend auf dem ersten Eingangssignal, das durch die erste elektronische Steuereinheit bereitgestellt ist;
Ausgeben (S460) des zweiten Ausgangssignals durch die zweite elektronische Steuereinheit basierend auf dem zweiten Eingangssignal und Bereitstellen des zweiten Ausgangssignals an die erste elektronische Steuereinheit; und
Detektieren (S468) des Funktionsstatus der ersten elektronischen Steuereinheit durch die zweite elektronische Steuereinheit basierend auf dem ersten Eingangssignal und dem ersten Ausgangssignal von der ersten elektronischen Steuereinheit.

7. Überwachungsverfahren nach Anspruch 6, wobei
das erste Ausgangssignal der zweiten elektronischen Steuereinheit über einen ersten redundanten Kommunikationskanal bereitgestellt wird.

8. Überwachungsverfahren nach Anspruch 6 oder 7, wobei
das zweite Ausgangssignal der ersten elektronischen Steuereinheit über einen zweiten redundanten Kommunikationskanal bereitgestellt wird.

9. Überwachungsverfahren nach einem der Ansprüche 6 bis 8, wobei das erste Eingangssignal durch die erste elektronische Steuereinheit und die zweite elektronische Steuereinheit über einen dritten redundanten Kommunikationskanal empfangen wird.

10. Überwachungsverfahren nach einem der Ansprüche 6 bis 9, wobei das zweite Eingangssignal durch die erste elektronische Steuereinheit und die zweite elektronische Steuereinheit über einen vierten redundanten Kommunikationskanal empfangen wird.

11. Elektronische Steuereinheit, umfassend:
einen Mikrocomputer;
eine Eingangsschaltung, die dazu konfiguriert ist, ein Eingangssignal vorzuverarbeiten und das verarbeitete Eingangssignal dem Mikrocomputer bereitzustellen; und
eine Ausgangsschaltung, die dazu konfiguriert ist, ein durch den Mikrocomputer gesendetes Verarbeitungsergebnis in ein Steuersignal zum Ausgeben umzuwandeln, wobei
der Mikrocomputer Folgendes umfasst:
eine Eingabe-/Ausgabe-Schnittstelle, die mit einem Bus, der Eingangsschaltung und der Ausgangsschaltung verbunden ist;
einen Prozessor, der mit dem Bus verbunden ist; und
einen Speicher, der mit dem Bus verbunden ist, wobei der Speicher ein Computerprogramm speichert und, wenn das Computerprogramm durch den Prozessor ausgeführt wird, der Prozessor in die Lage versetzt wird, das Steuerungsverfahren nach einem der Ansprüche 1 bis 5 durchzuführen.

12. Steuergerät (134), umfassend:
eine erste elektronische Steuereinheit; und
eine zweite elektronische Steuereinheit, wobei
die erste elektronische Steuereinheit und die zweite elektronische Steuereinheit jeweils die durch die erste elektronische Steuereinheit durchgeführten Operationen und die durch die zweite elektronische Steuereinheit durchgeführten Operationen in dem Überwachungsverfahren nach einem der Ansprüche 6 bis 10 durchführen.

13. Steuerungssystem (130), umfassend:
das Steuergerät (134) nach Anspruch 12;
ein erstes Eingangsende (132), das dazu konfiguriert ist, das erste Eingangssignal zu empfangen und das empfangene erste Eingangssignal getrennt an die erste elektronische Steuereinheit und die zweite elektronische Steuereinheit in dem Steuergerät zu senden;
ein zweites Eingangsende, das dazu konfiguriert ist, das zweite Eingangssignal zu empfangen und das empfangene zweite Eingangssignal getrennt an die zweite elektronische Steuereinheit und die erste elektronische Steuereinheit in dem Steuergerät zu senden;
die erste Antriebseinheit (135), die mit der ersten elektronischen Steuereinheit und der zweiten elektronischen Steuereinheit verbunden ist; und
die zweite Antriebseinheit, die mit der ersten elektronischen Steuereinheit und der zweiten elektronischen Steuereinheit verbunden ist.

14. Fahrzeug (100), wobei das Fahrzeug das Steuerungssystem (130) nach Anspruch 13 umfasst.

15. Computerlesbares Speichermedium, wobei das computerlesbare Speichermedium ein Computerprogramm speichert und, wenn das Computerprogramm durch eine elektronische Steuereinheit ausgeführt wird, die elektronische Steuereinheit in die Lage versetzt wird, das Steuerungsverfahren nach einem der Ansprüche 1 bis 5 durchzuführen.

## Revendications

1. Procédé de commande, dans lequel le procédé de commande est utilisé par une première unité de commande électronique pour surveiller une seconde unité de commande électronique, et le procédé de commande comprend :
la réception (S402 ; S452), par la première unité de commande électronique, d'un premier signal d'entrée et d'un second signal d'entrée, dans lequel le premier signal d'entrée et le second signal d'entrée comprennent des données dérivées du capteur ;
la production (S406 ; S456), par la première unité de commande électronique, d'un premier signal de sortie sur la base du premier signal d'entrée, et la fourniture du premier signal de sortie à la seconde unité de commande électronique, dans lequel le premier signal de sortie comprend un premier signal de commande à fournir à une première unité d'entraînement d'un premier actionneur commandé par la première unité de commande électronique ;
la réception (S410), par la première unité de commande électronique, d'un second signal de sortie provenant de la seconde unité de commande électronique, dans lequel le second signal de sortie est émis par la seconde unité de commande électronique sur la base du second signal d'entrée, et dans lequel le second signal de sortie comprend un second signal de commande destiné à être fourni à une seconde unité d'entraînement d'un second actionneur commandé par la seconde unité de commande électronique ; et
la détection (S414 ; S464), par la première unité de commande électronique, d'un état fonctionnel de la seconde unité de commande électronique sur la base du second signal d'entrée et du second signal de sortie,
dans lequel le premier signal de sortie doit être utilisé par la seconde unité de commande électronique pour détecter (S468) un état fonctionnel de la première unité de commande électronique sur la base du premier signal d'entrée et du premier signal de sortie.

2. Procédé de commande selon la revendication 1, dans lequel le premier signal de sortie est fourni à la seconde unité de commande électronique à travers un premier canal de communication redondant.

3. Procédé de commande selon la revendication 1 ou 2, dans lequel le second signal de sortie est reçu par la première unité de commande électronique à travers un deuxième canal de communication redondant.

4. Procédé de commande selon l'une quelconque des revendications 1 à 3, dans lequel
le premier signal de sortie est reçu par la première unité de commande électronique à travers un troisième canal de communication redondant.

5. Procédé de commande selon l'une quelconque des revendications 1 à 4, dans lequel
le second signal d'entrée est reçu par la première unité de commande électronique à travers un quatrième canal de communication redondant.

6. Procédé de surveillance d'un dispositif de commande, dans lequel le dispositif de commande comprend une première unité de commande électronique et une seconde unité de commande électronique, et le procédé de surveillance comprend :
l'exécution du procédé de commande selon la revendication 1 par la première unité de commande électronique ;
la réception (S452), par la seconde unité de commande électronique, du premier signal d'entrée et du second signal d'entrée ;
la réception, par la seconde unité de commande électronique, du premier signal de sortie sur la base du premier signal d'entrée fourni par la première unité de commande électronique ;
la sortie (S460), par la seconde unité de commande électronique, du second signal de sortie sur la base du second signal d'entrée, et la fourniture du second signal de sortie à la première unité de commande électronique ; et
la détection (S468), par la seconde unité de commande électronique, de l'état fonctionnel de la première unité de commande électronique sur la base du premier signal d'entrée et du premier signal de sortie en provenance de la première unité de commande électronique.

7. Procédé de surveillance selon la revendication 6, dans lequel le premier signal de sortie est fourni à la seconde unité de commande électronique à travers un premier canal de communication redondant.

8. Procédé de surveillance selon la revendication 6 ou 7, dans lequel
le second signal de sortie est fourni à la première unité de commande électronique à travers un deuxième canal de communication redondant.

9. Procédé de surveillance selon l'une quelconque des revendications 6 à 8, dans lequel
le premier signal d'entrée est reçu par la première unité de commande électronique et la seconde unité de commande électronique à travers un troisième canal de communication redondant.

10. Procédé de surveillance selon l'une quelconque des revendications 6 à 9, dans lequel
le second signal d'entrée est reçu par la première unité de commande électronique et la seconde unité de commande électronique à travers un quatrième canal de communication redondant.

11. Unité de commande électronique, comprenant :
un micro-ordinateur ;
un circuit d'entrée, configuré pour prétraiter un signal d'entrée, et fournir le signal d'entrée traité au micro-ordinateur ; et
un circuit de sortie, configuré pour convertir un résultat de traitement envoyé par le micro-ordinateur en un signal de commande pour la sortie, dans laquelle
le micro-ordinateur comprend :
une interface d'entrée/sortie, connectée à un bus, au circuit d'entrée et au circuit de sortie ;
un processeur, connecté au bus ; et
une mémoire, connectée au bus, dans laquelle la mémoire stocke un programme informatique, et lorsque le programme informatique est exécuté par le processeur, le processeur est en mesure d'exécuter le procédé de commande selon l'une quelconque des revendications 1 à 5.

12. Dispositif de commande (134), comprenant :
une première unité de commande électronique ; et
une seconde unité de commande électronique, dans lequel
la première unité de commande électronique et la seconde unité de commande électronique exécutent respectivement les opérations effectuées par la première unité de commande électronique et les opérations effectuées par la seconde unité de commande électronique dans le procédé de surveillance selon l'une quelconque des revendications 6 à 10.

13. Système de commande (130), comprenant :
le dispositif de commande (134) selon la revendication 12 ;
une première extrémité d'entrée (132), configurée pour recevoir le premier signal d'entrée, et envoyer le premier signal d'entrée reçu à la première unité de commande électronique et à la seconde unité de commande électronique dans le dispositif de commande séparément ;
une seconde extrémité d'entrée, configurée pour recevoir le second signal d'entrée, et envoyer le second signal d'entrée reçu à la seconde unité de commande électronique et à la première unité de commande électronique dans le dispositif de commande séparément ;
la première unité d'entraînement (135), connectée à la première unité de commande électronique et à la seconde unité de commande électronique ; et
la seconde unité d'entraînement, connectée à la première unité de commande électronique et à la seconde unité de commande électronique.

14. Véhicule (100), dans lequel le véhicule comprend le système de commande (130) selon la revendication 13.

15. Support de stockage lisible par ordinateur, dans lequel le support de stockage lisible par ordinateur stocke un programme informatique, et lorsque le programme informatique est exécuté par une unité de commande électronique, l'unité de commande électronique est actionnée pour exécuter le procédé de commande selon l'une quelconque des revendications 1 à 5.
